# EUROPEAN PATENT SPECIFICATION

(11) **EP 2 652 923 B1**
(45) Date of publication and mention of the grant of the patent: **12.10.2016**
(21) Application number: 11848569.7
(22) Date of filing: 15.08.2011
(51) Int. Cl.: H04L 12/721

(54) **COMMUNICATION PATH CONTROL SYSTEM, PATH CONTROL DEVICE, COMMUNICATION PATH CONTROL METHOD, AND PATH CONTROL PROGRAM**
KOMMUNIKATIONSPFADSTEUERSYSTEM, PFADSTEUERVORRICHTUNG, KOMMUNIKATIONSPFADSTEUERVERFAHREN UND PFADSTEUERPROGRAMM
SYSTÈME DE CONTRÔLE DE CHEMINS DE COMMUNICATION, DISPOSITIF DE CONTRÔLE DE CHEMINS, PROCÉDÉ DE CONTRÔLE DE CHEMINS DE COMMUNICATION ET PROGRAMME DE CONTRÔLE DE CHEMINS

(30) Priority: 13.12.2010 JP 2010277204
(43) Date of publication of application: 23.10.2013
(73) Proprietor: NEC Corporation, Tokyo 108-8001 (JP)
(72) Inventor: ITOH, Nobuhiko, Tokyo 108-8001 (JP)
(74) Representative: Robson, Aidan John
(86) International application number: PCT/JP2011/004587
(87) International publication number: WO 2012/081145

(56) References cited:
- WO-A1-2010/103909
- JP-A- 2005 057 356
- "OPENFLOW SWITCH SPECIFICATION VERSION 1.0.0 (WIRE PROTOCOL OX01)", INTERNET CITATION, 31 December 2009 (2009-12-31), pages 1-42, XP008166937, Retrieved from the Internet: URL:http://web.archive.org/web/20100601182 810/http://www.openflowswitch.org/document s/openflow-spec-v1.0.0.pdf [retrieved on 2014-01-24]
- NICK MCKEOWN ET AL: "OpenFlow: Enabling Innovation in Campus Networks", ACM SIGCOMM COMPUTER COMMUNICATION REVIEW, vol. 38, no. 2, 1 April 2008 (2008-04-01), pages 69-74, XP055091294, ISSN: 0146-4833, DOI: 10.1145/1355734.1355746

## Description

### Technical Field

The present invention relates to a communication path control system, a path control device, a communication path control method, and a path control program for controlling a communication path.

### Background Art

A technology called OpenFlow is proposed in recent years (see Non Patent Literatures (NPL) 1 and 2). OpenFlow is a technology that treats communication as an end-to-end flow, and performs path control, failure recovery, load distribution, optimization, and the like on a flow-by-flow basis.

In a network where communication is performed using OpenFlow (hereafter referred to as an OpenFlow network), an OpenFlow switch and an OpenFlow controller are used. The OpenFlow switch functions as a packet transmitting device. The OpenFlow controller functions as a path control device.

The OpenFlow switch includes a secure channel used for communication with the OpenFlow controller, and operates according to a flow table for which an add instruction or a rewrite instruction is appropriately sent from the OpenFlow controller via the secure channel.

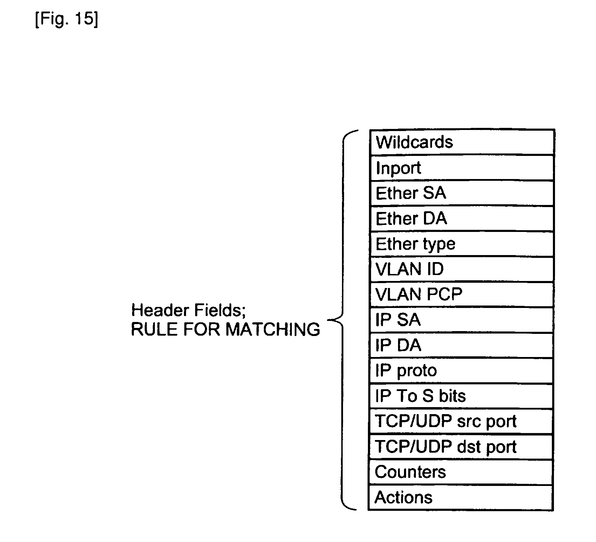

Fig. 15 is an explanatory diagram showing an ordinary flow table. In the flow table, a combination including: a rule for matching (Header Fields) used for comparison against a packet header; flow statistic information (Counters); and an action (Actions) defining a process for a packet is defined for each flow.

For example, upon receiving a packet, the OpenFlow switch searches the flow table for an entry including a rule for matching that matches header information of the received packet. In the case where the entry matching the received packet is found as a result of the search, the OpenFlow switch updates the flow statistic information (Counters). In this case, the OpenFlow switch also performs a process (e.g. sending the packet from a designated port, flooding, discard) defined in an action field of the entry, on the received packet.

In the case where the entry matching the received packet is not found as a result of searching the flow table, on the other hand, the OpenFlow switch transmits the received packet to the OpenFlow controller via the secure channel. Thus, the OpenFlow switch queries about a process for the packet. For instance, the OpenFlow switch requests the OpenFlow controller to determine a path of the received packet based on a source and a destination of the received packet, receives the determined entry, and updates the flow table. Hence, the OpenFlow switch transmits the packet, by using the entry stored in the flow table as a process rule.

Note that the OpenFlow controller also has a function of collecting the flow statistic information (Counters) that is updated each time a packet is processed. This function is also called a visualization function.

A system in which a switch transmits a packet based on a flow table controlled by a controller is described in Patent Literature (PTL) 1. In the system described in PTL 1, when the switch receives a packet not found in the flow table, the switch transmits the packet to the controller. When the switch receives a packet found in the flow table, the system transmits the packet based on the flow table.

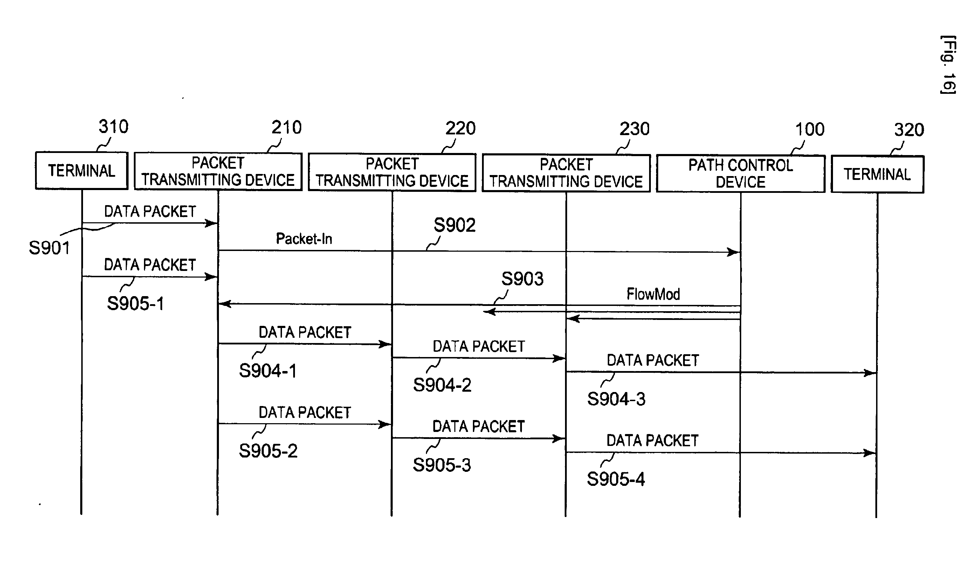

Fig. 16 is an explanatory diagram showing an example of an ordinary packet flow in the OpenFlow network. A packet flow in the network described in each of PTL 1, NPL 1, and NPL 2 is described below, with reference to Fig. 16.

In the case where a terminal 310 sends the first data packet to a terminal 320, the data packet is first sent to a packet transmitting device 210 connected to the terminal 320 (step S901). Upon receiving the packet, the packet transmitting device 210 searches a flow table for an entry including a rule for matching (also referred to as a comparison rule or a matching key) that matches header information of the received packet.

However, since the received packet is the first packet, there is no corresponding entry in the flow table. Accordingly, the packet transmitting device 210 buffers the received packet, and then sends a control message indicating that a new flow is detected (hereafter also referred to as an information message about detecting a new flow or a Packet-In message), to a path control device (controller) 100 (step S902).

The Packet-In message includes information necessary for identifying the flow (e.g. a MAC (Media Access Control) address, an IP (Internet Protocol) address, a port number (for both the source and the destination)) and information indicating a receiving port of the packet.

It is assumed here that the packet transmitting device 210 buffers the received packet and sends the information necessary for identifying the flow to the path control device (controller) 100, but there is also an instance where the packet transmitting device 210 sends the received packet itself to the path control device (controller) 100.

Upon receiving the Packet-In message, the path control device (controller) 100 creates a comparison rule (matching key) of a new entry from the received message, and determines a timer value applied to the entry. Information created as the comparison rule is, for instance, the information from "InPort" to "TCP/UDP src port" shown as an example in Fig. 15.

The path control device (controller) 100 further checks a location of the terminal 320 as the destination based on the received message, and computes a packet transmission route from the terminal 310 to the terminal 320. It is assumed here that, as a result of transmission route computation, the transmission route of transmitting the packet in the order of the packet transmitting device 210 ->a packet transmitting device 220 ->a packet transmitting device 230 is computed.

Next, the path control device (controller) 100 creates an entry in which an action defining transmission according to the computed transmission route and the timer value are set for a packet that matches the comparison rule (matching key) of the new entry, for each of the packet transmitting devices 210 to 230. The path control device (controller) 100 notifies each of the packet transmitting devices 210 to 230 of the created entry, using a FlowMod message (step S903). The FlowMod message mentioned here is a message used when the controller requests the switch to register, change, or delete a flow. Upon receiving the FlowMod message, each of the packet transmitting devices 210 to 230 sets the received entry in the flow table.

Having completed the setting of the entry, the packet transmitting device 210 transmits the buffered packet to the packet transmitting device 220, according to the set entry (step S904-1). The packet transmitting devices 220 and 230 on the transmission route through which the packet is to be transmitted have already set the entry, so that the packet is transmitted to the packet transmitting device 220 and then to the packet transmitting device 230, and eventually arrives at the terminal320 (steps S904-2 and S904-3).

Subsequently, in the case of sending a packet from the terminal310 to the terminal 320, the packet is transmitted in the order of the packet transmitting device 210 ->the packet transmitting device 220 ->the packet transmitting device 230 according to the transmission route (steps S905-1 to S905-4), and arrives at the terminal320.

WO 2010/103909 shows an openflow system in which openflow switches control the packet transmission and receptions in accordance with flow entries. Each of the flow entries includes a match condition indicating the communication flow of a packet and also includes an action indicating the processing of the packet. An openflow controller generates a to be registered flow entry that is to be stored in the flow table of a particular openflow switch located on a path in the communication flow. The openflow controller then associates the to be registered flow entry with an ordinary packet to generate a capsuled packet. The particular openflow switch extracts, as a new flow entry, the to be registered flow entry from the capsule packet in response to the reception of the capsuled packet and executes the action indicated in the new flow entry.

### Citation List

### Patent Literature

PTL 1: Domestic re-publication of PCT International Application No. WO2008/095010
PCT International application number WO 2010/103909.

### Non Patent Literature

NPL 1: Nick McKeown, and seven others, "OpenFlow: Enabling Innovation in Campus Networks", [online], [search on July 6, 2010], Internet <URL: http://www.openflowswitch.org/documents/openflow-wp-latest.pdf>, March 14, 2008 NPL 2: "OpenFlow Switch Specification", Version 1.0.0. (Wire Protocol Ox01) [search on July 6, 2010], Internet <URL:
http://www.openflowswitch.org/documents/openflow-spec-v1.0.0.pdf>, December 31, 2009

### Summary of Invention

### Technical Problem

As described above, in the OpenFlow network, the OpenFlow switch receives a data packet. In the case where an entry corresponding to the received packet is not found in the flow table, the OpenFlow switch transmits the received packet to the OpenFlow controller via the secure channel. Thus, the OpenFlow switch queries about an action for the data packet. This query is also referred to as Packet-In.

The OpenFlow controller determines a path of the received packet, based on information indicating a source and a destination of the received packet. The OpenFlow controller sends the determined path information (hereafter also referred to as FlowMod) to all OpenFlow switches on the path, using a secure channel formed according to TCP (Transmission Control Protocol), SSL (Secure Sockets Layer), or the like.

That is, the OpenFlow network can be regarded as a network in which the OpenFlow controller and the OpenFlow switch exchange (send/receive) control messages to thereby enable a data packet to arrive at its destination. Therefore, when the number of flows increases, the number of control messages sent/received between the OpenFlow controller and the OpenFlow switch increases, too. This raises a possibility of putting significant pressure on network bandwidth.

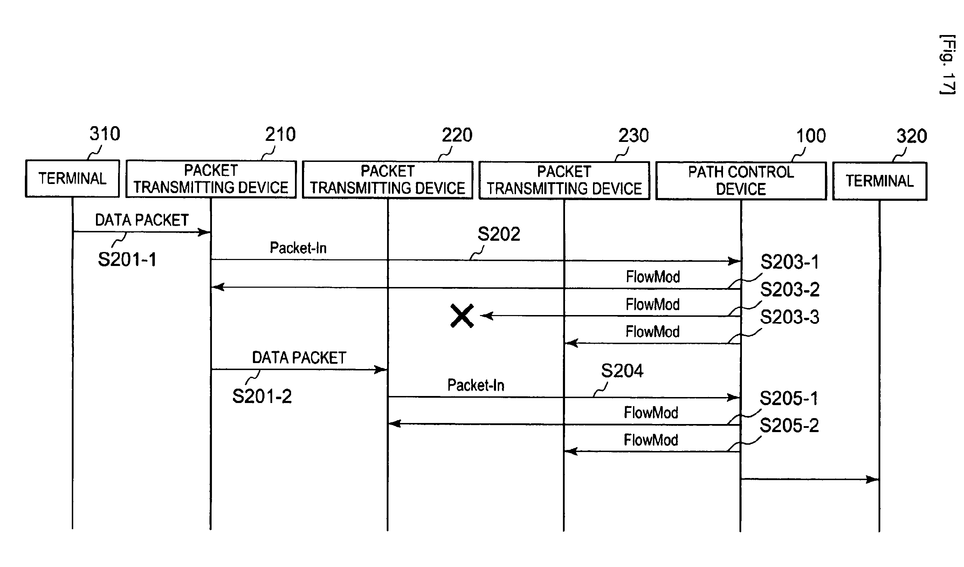

Fig. 17 is an explanatory diagram showing another example of a packet flow in the OpenFlow network. Steps S201-1 to S202 in which the path control device 100 receives the Packet-In message from the packet transmitting device and computes the transmission route are the same as steps S901 to S902 in Fig. 16.

Having completed the computation of the transmission route, the path control device (controller) 100 creates the entry in which the action defining transmission according to the computed transmission route and the timer value are set for a packet that matches the comparison rule (matching key) of the new entry, for each of the packet transmitting devices 210 to 230. The path control device (controller) 100 notifies each of the packet transmitting devices 210 to 230 of the created entry, using the FlowMod message (steps S203-1, S203-2, and S203-3).

Suppose here that, when notifying each of the packet transmitting devices 210 to 230 of the created entry, the FlowMod message to the packet transmitting device 210 (the FlowMod message sent in step S203-1) and the FlowMod message to the packet transmitting device 230 (the FlowMod message sent in step S203-3) arrive at the packet transmitting devices 210 and 230 respectively, but the FlowMod message to the packet transmitting device 220 (the FlowMod message sent in step S203-2) does not arrive at the packet transmitting device 220 due to a packet loss, a delay, or the like caused by network congestion.

Having received the FlowMod message and completed the setting of the entry in the flow table, the packet transmitting device 210 transmits the buffered packet to the packet transmitting device 220, according to the set entry (step S201-2). Upon receiving the data packet from the packet transmitting device 210, the packet transmitting device 220 searches the flow table for an entry including a comparison rule (matching key) that matches the header information of the packet. However, since the FlowMod message does not arrive at the packet transmitting device 220, there is no corresponding entry in the flow table. Accordingly, the packet transmitting device 220 buffers the received packet, and then sends an information message about detecting a new flow (Packet-In message) to the path control device (controller) 100 (step S204).

Upon receiving the Packet-In message, the path control device (controller) 100 creates a comparison rule (matching key) of a new entry based on the received information, and determines a timer value applied to the entry. Information created as the comparison rule is, for instance, the information from "InPort" to "TCP/UDP src port" shown as an example in Fig. 15. The path control device (controller) 100 further checks the location of the terminal 320 as the destination based on the received information, and computes a packet transmission route from the terminal 310 to the terminal 320. It is assumed here that, as a result of transmission route computation, the transmission route of transmitting the packet in the order of the packet transmitting device 220 -> the packet transmitting device 230 is computed.

Next, the path control device (controller) 100 creates an entry in which an action defining transmission according to the computed transmission route and the timer value are set for a packet that matches the comparison rule (matching key) of the new entry, for each of the packet transmitting devices 220 and 230. The path control device (controller) 100 notifies each of the packet transmitting devices 220 and 230 of the created entry, using a FlowMod message (steps S205-1 and S205-2).

The packet transmitting devices 220 and 230 each successfully receive the FlowMod message, and set the received entry in the flow table. As a result of setting the entry in this way, the terminal 320 can receive the data packet.

However, the FlowMod message received by the packet transmitting device 230 in step S203-3 and the FlowMod message received by the packet transmitting device 230 in step S205-2 are the same message, because they relate to the entry for the same data packet. This means that the packet transmitting device 230 receives the same message twice from the path control device 100.

Sending/receiving such a redundant control packet has a possibility of causing a decrease in use efficiency of the network. In the examples shown in Figs. 16 and 17, there are three packet transmitting devices between the terminal 310 and the terminal 320. However, an increase in the number of packet transmitting devices between the terminals (i.e. an increase in hop count) can lead to a further increase in the number of unnecessary control packets. Sending/receiving such unnecessary control packets is likely to impact the network and decrease the use efficiency of the network.

In view of this, an exemplary object of the present invention is to provide a communication path control system, a path control device, a communication path control method, and a path control program that can reduce the number of packets used for communication path control.

### Solution to Problem

A communication path control system according to an exemplary aspect of the present invention is a communication path control system comprising: a packet transmitting device for transmitting a received packet based on a packet transmission rule which is a rule defining a transmission method of the packet; and a path control device for controlling a communication path of the packet, by instructing the packet transmitting device to apply the packet transmission rule, wherein the packet transmitting device includes process querying means for querying the path control device about a process for the received packet, and wherein the path control device includes packet transmitting device determining means for, when receiving the query about the process for the packet from the packet transmitting device, determining a packet transmitting device that is to apply the packet transmission rule determined according to the packet, based on whether or not the query about the process for the packet is a first-time query.

A path control device according to an exemplary aspect of the present invention is a path control device comprising packet transmitting device determining means for, when receiving a query about a process for a packet from a packet transmitting device that transmits a received packet based on a packet transmission rule which is a rule defining a transmission method of the packet, determining a packet transmitting device that is to apply the packet transmission rule determined according to the packet, based on whether or not the query about the process for the packet is a first-time query.

A communication path control method according to an exemplary aspect of the present invention is a communication path control method wherein a packet transmitting device for transmitting a received packet based on a packet transmission rule which is a rule defining a transmission method of the packet queries a path control device for controlling a communication path of the packet, about a process for the received packet, and wherein, when receiving the query about the process for the packet from the packet transmitting device, the path control device determines a packet transmitting device that is to apply the packet transmission rule determined according to the packet, based on whether or not the query about the process for the packet is a first-time query.

A path control program according to an exemplary aspect of the present invention is a path control program for causing a computer to execute a packet transmitting device determining process of, when receiving a query about a process for a packet from a packet transmitting device that transmits a received packet based on a packet transmission rule which is a rule defining a transmission method of the packet, determining a packet transmitting device that is to apply the packet transmission rule determined according to the packet, based on whether or not the query about the process for the packet is a first-time query.

### Advantageous Effects of Invention

According to the present invention, the number of packets used for communication path control can be reduced.

### Brief Description of Drawings

[fig.1]Figure 1 is a block diagram showing an example of a communication path control system in Exemplary Embodiment 1 of the present invention.
[fig.2]Figure 2 is a block diagram showing an example of a packet transmitting device.
[fig.3]Figure 3 is a block diagram showing an example of a path control device in Exemplary Embodiment 1.
[fig.4]Figure 4 is a flowchart showing an example of an operation of the path control device.
[fig.5]Figure 5 is a block diagram showing an example of a path control device in Exemplary Embodiment 2 of the present invention.
[fig.6]Figure 6 is an explanatory diagram showing an example of a packet flow in an OpenFlow network.
[fig.7]Figure 7 is an explanatory diagram showing an example of a communication path control system in Example 1 of the present invention.
[fig.8]Figure 8 is a flowchart showing an example of an operation of a path control device.
[fig.9]Figure 9 is an explanatory diagram showing an example of an operation of determining a packet transmitting device that is to be notified of a process rule.
[fig.10]Figure 10 is an explanatory diagram showing an example of network topology information.
[fig.11]Figure 11 is an explanatory diagram showing an example of a packet flow in the OpenFlow network.
[fig.12]Figure 12 is an explanatory diagram showing an example of an operation of determining a packet transmitting device.
[fig.13]Figure 13 is a block diagram showing an example of a minimum structure of a communication path control system according to the present invention.
[fig.14]Figure 14 is a block diagram showing an example of a minimum structure of a path control device according to the present invention.
[fig.15]Figure 15 is an explanatory diagram showing a flow table.
[fig.16]Figure 16 is an explanatory diagram showing an example of a packet flow in the OpenFlow network.
[fig.17]Figure 17 is an explanatory diagram showing an example of a packet flow in the OpenFlow network.

### Description of Embodiments

The following describes exemplary embodiments of the present invention with reference to drawings.

### Exemplary Embodiment 1

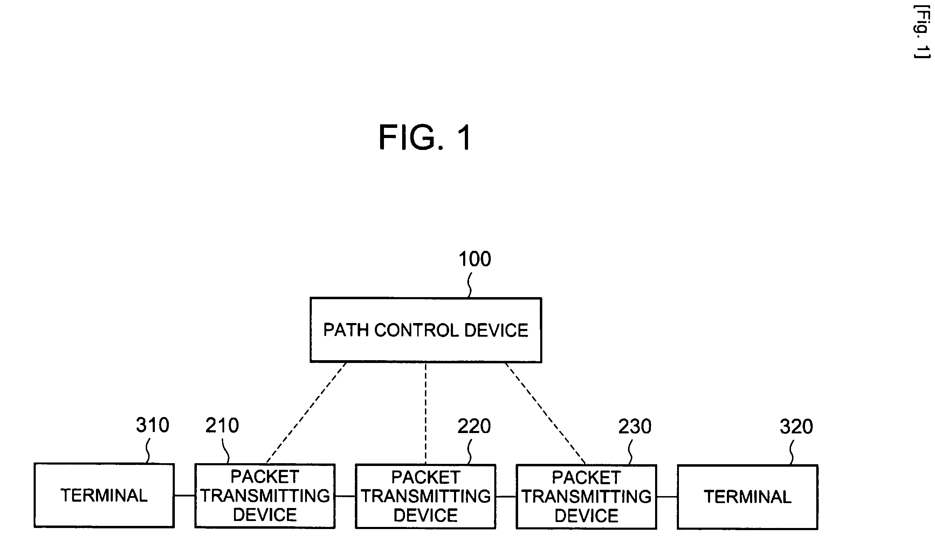

Fig. 1 is a block diagram showing an example of a communication path control system in Exemplary Embodiment 1 of the present invention. The communication path control system in Exemplary Embodiment 1 includes a path control device 100, packet transmitting devices 210 to 230, and terminals 310 and 320. Note, however, that the number of packet transmitting devices and the number of terminals are not limited to the numbers shown as an example in Fig. 1. The number of packet transmitting devices may be one, two, or four or more. The number of terminals may be three or more.

Each of the packet transmitting devices 210 to 230 is a device that, when receiving a packet, transmits the received packet based on a predetermined rule. This rule is also referred to as a packet transmission rule. For example, the packet transmitting device is realized by a router, a switch, or the like.

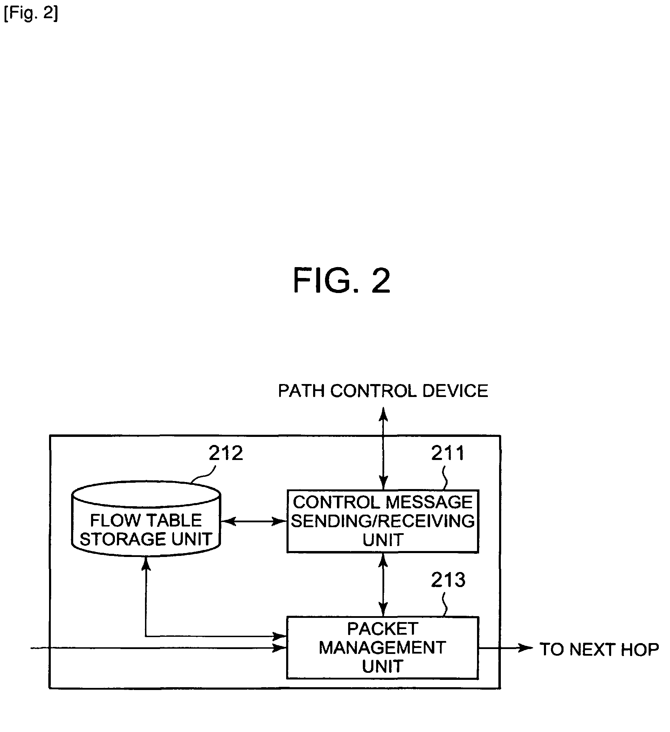

Fig. 2 is a block diagram showing an example of the packet transmitting device 210. Since the packet transmitting devices 220 and 230 have the same structure as the packet transmitting device 210, their description is omitted. The packet transmitting device 210 includes a control message sending/receiving unit 211, a flow table storage unit 212, and a packet management unit 213.

The control message sending/receiving unit 211 has a function of communicating with the path control device 100. That is, the control message sending/receiving unit 211 sends/receives a control message to/from the path control device 100.

The flow table storage unit 212 stores a flow table. In the flow table, a combination including: a rule for matching (Header Fields) used for comparison against a packet header; flow statistic information (Counters); and an action (Actions) defining a process for a packet is defined for each flow. This combination is hereafter also referred to as a process rule (flow entry). For instance, the information shown as an example in Fig. 15 is included in the flow table.

The packet management unit 213 manages a received packet based on an action included in the flow table. In detail, when the packet transmitting device 210 receives a packet, the packet management unit 213 searches the flow table stored in the flow table storage unit 212 for a process rule (flow entry) including a comparison rule (matching key) that matches the received packet. In the case where the flow entry that matches the received packet is found as a result of the search, the packet management unit 213 performs a process (e.g. sending the packet from a designated port, flooding, discard) defined in an action field of the flow entry, on the received packet.

In the case where the entry that matches the received packet is not found in the flow table, the packet management unit 213 sends a control message indicating that a new flow is detected (i.e. an information message about detecting a new flow) to the path control device 100, thereby querying about a process for the packet.

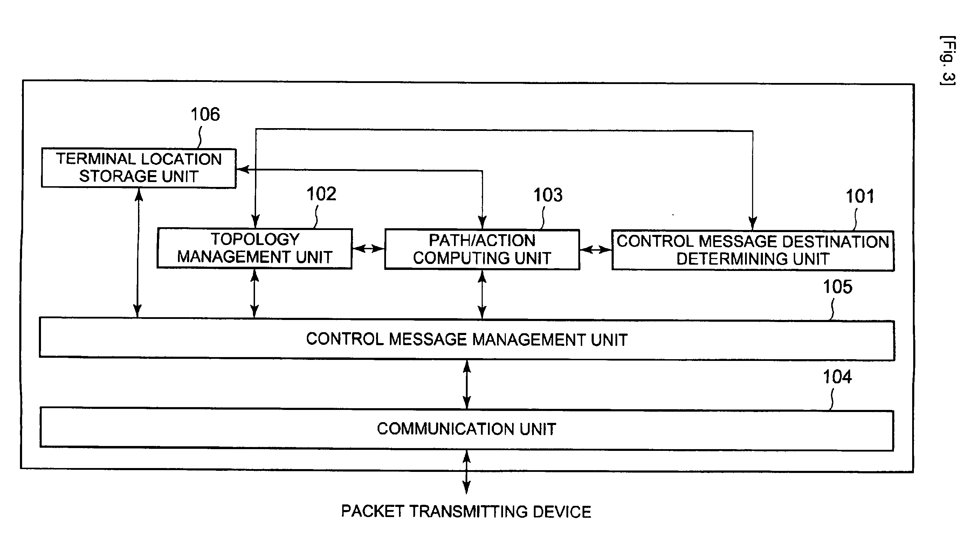

The path control device 100 is a device that performs path control in the network managed by the path control device 100. In detail, the path control device 100 is a device that controls a packet communication path, by instructing a packet transmitting device to apply a packet transmission rule. In Exemplary Embodiment 1, the path control device 100 manages the packet transmitting devices 210 to 230. Fig. 3 is a block diagram showing an example of the path control device 100. The path control device 100 includes a control message destination determining unit 101, a topology management unit 102, a path/action computing unit 103, a communication unit 104, a control message management unit 105, and a terminal location storage unit 106.

The communication unit 104 has a function by which the path control device 100 communicates with the packet transmitting devices 210 to 230. That is, the communication unit 104 sends/receives a packet to/from the packet transmitting devices 210 to 230.

The topology management unit 102 creates network topology information based on connection relations of the packet transmitting devices 210 to 230 collected via the communication unit 104, and stores the created topology information. The topology information mentioned here is information indicating a connection configuration in which a packet transmitting device connects with another device. For example, the topology management unit 102 collects information of a path table held in each of the packet transmitting devices 210 to 230, and creates the network topology information based on the path table. Note, however, that the method of creating the network topology information is not limited to this. The topology management unit 102 may receive network topology information from another path control device 100 and store the received network topology information.

The terminal location storage unit 106 stores terminal location information. For example, the terminal location storage unit 106 stores a database of location information such as an IP address. The terminal location information may be stored in the terminal location storage unit 106 beforehand by an administrator or the like. Alternatively, whenever the path control device 100 receives location information from another path control device, the received location information may be stored in the terminal location storage unit 106. For example, the terminal location storage unit 106 is realized by a magnetic disk or the like.

The path/action computing unit 103 computes an action to be executed by the packet transmitting devices 210 to 230 and a packet transmission route, as a process rule (flow entry). In detail, the path/action computing unit 103 specifies locations of a source terminal and a destination terminal from the location information stored in the terminal location storage unit 106, and computes a transmission route of a packet based on the network topology information managed by the topology management unit 102. The path/action computing unit 103 also determines a process (action) to be executed on the packet by each packet transmitting device on the transmission route. An arbitrary method may be used as the method of determining the action. For example, in the case where the path/action computing unit 103 successfully computes the transmission route, the path/action computing unit 103 may determine that an action of transmitting the packet is to be executed. For a packet of a predetermined type, on the other hand, the path/action computing unit 103 may determine that a predetermined action such as discarding the packet, transmitting the packet to a predetermined device, or the like is to be executed.

The control message destination determining unit 101 determines a packet transmitting device that is to be notified of the process rule (flow entry), from among the packet transmitting devices on the path computed by the path/action computing unit 103. In detail, the control message destination determining unit 101 determines the packet transmitting device that is to be notified of the flow entry (i.e. that is to apply the flow entry), based on whether or not a query about a process for the packet from a packet transmitting device is a first-time query.

The control message management unit 105 analyzes a control message received from the packet transmitting devices 210 to 230, and passes the control message to a corresponding unit in the path control device 100. For example, in the case of receiving an information message about detecting a new flow from any of the packet transmitting devices 210 to 230, the control message management unit 105 requests the path/action computing unit 103 to create a new process rule (flow entry).

The control message destination determining unit 101, the topology management unit 102, the path/action computing unit 103, the communication unit 104, and the control message management unit 105 are realized by a CPU of a computer operating according to a program (path control program). For example, the program may be stored in a storage unit (not shown) in the path control device 100, with the CPU reading the program and, according to the program, operating as the control message destination determining unit 101, the topology management unit 102, the path/action computing unit 103, the communication unit 104, and the control message management unit 105. Alternatively, the control message destination determining unit 101, the topology management unit 102, the path/action computing unit 103, the communication unit 104, and the control message management unit 105 may be each realized by dedicated hardware.

The following describes an operation of the communication path control system in Exemplary Embodiment 1, with reference to Fig. 16.

When the terminal 310 sends a data packet to the packet transmitting device 210 and the packet transmitting device 210 receives the packet (step S901), the packet management unit 213 searches the flow table for an entry including a comparison rule (matching key) that matches header information of the received packet. However, since the received packet is the first packet, there is no corresponding entry in the flow table. Accordingly, the packet management unit 213 buffers the received packet, and then sends an information message about detecting a new flow to the path control device 100 (step S902).

The information message about detecting a new flow includes information necessary for identifying the flow (e.g. a MAC address, an IP address, a port number (for both the source and the destination)) and information indicating a receiving port of the packet.

It is assumed here that the packet transmitting device 210 buffers the received packet and sends the information necessary for identifying the flow to the path control device 100, but the packet transmitting device 210 may send the received packet itself to the path control device 100.

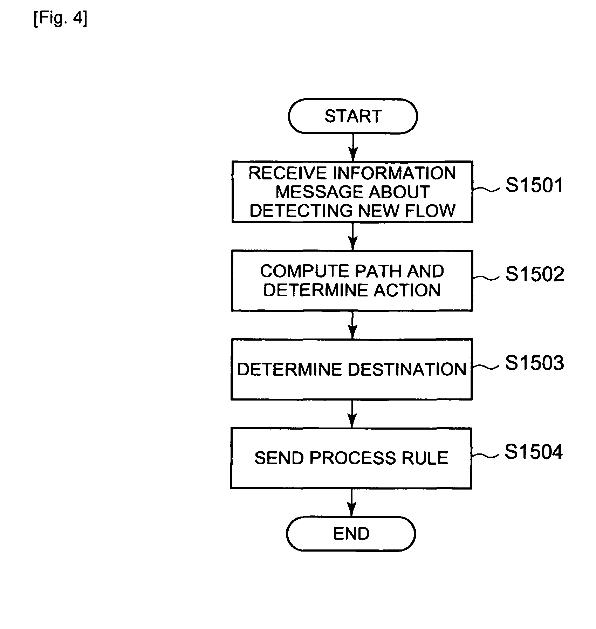

An operation when the path control device 100 receives the information message about detecting a new flow is described below. Fig. 4 is a flowchart showing an example of the operation of the path control device 100.

When the path control device 100 receives the information message about detecting a new flow from the packet transmitting device 210 (step S1501 in Fig. 4), the path/ action computing unit 103 computes a path of the packet, and determines an action of each packet transmitting device located on the path (step S1502). Following this, the control message destination determining unit 101 determines a packet transmitting device as a destination that is to be notified of a process rule including the action, from among the packet transmitting devices on the path (step S1503).

In detail, when the information message about detecting a new flow is received, the control message destination determining unit 101 determines whether or not the packet transmitting device sending the information message is the first packet transmitting device from the source terminal of the data packet. For example, the control message destination determining unit 101 may reference the network topology information and determine whether or not the device sending the data packet to the packet transmitting device is the terminal or not, based on information included in the information message about detecting a new flow, namely, the identifier of the packet transmitting device and the port number of the port at which the packet transmitting device receives the data packet.

In the case where the packet transmitting device sending the information message about detecting a new flow is the first packet transmitting device from the source terminal of the data packet, the control message destination determining unit 101 determines to notify the process rule to all packet transmitting devices on the path computed by the path/action computing unit 103. In the case where the packet transmitting device sending the information message about detecting a new flow is not the first packet transmitting device, on the other hand, the control message destination determining unit 101 determines to notify the process rule only to the packet transmitting device sending the information message about detecting a new flow. The control message destination determining unit 101 sends the process rule to the determined control message destination (step S1504).

When each of the packet transmitting devices 210 to 230 receives the process rule from the path control device 100, the control message sending/receiving unit 211 sets the received entry in the flow table. The packet management unit 213 then transmits the buffered packet to the packet transmitting device 220, according to the set entry (step S904-1 in Fig. 16). The packet transmitting devices 220 and 230 on the transmission route through which the packet is to be transmitted have already set the entry, so that the packet is transmitted to the packet transmitting device 220 and then to the packet transmitting device 230, and eventually arrives at the terminal 320 (steps S904-2 and S904-3).

As described above, according to Exemplary Embodiment 1, the control message sending/receiving unit 211 in a packet transmitting device queries the path control device 100 about a process for a received packet. When receiving the query about the process for the received packet from the packet transmitting device, the control message destination determining unit 101 in the path control device 100 determines a packet transmitting device that is to apply a packet transmission rule determined according to the packet, based on whether or not the query about the process for the packet is a first-time query.

In detail, the control message destination determining unit 101 determines the packet transmitting device that is to apply the packet transmission rule, based on whether or not the packet transmitting device making the query is the first packet transmitting device on a path through which the packet is to be transmitted. According to such a structure, the number of packets used for communication path control can be reduced. Since it is possible to avoid sending a redundant control packet from the OpenFlow controller to the OpenFlow switch, an improvement in network use efficiency, a reduction in control packet sending load in the OpenFlow controller, and a reduction in control packet management load in the OpenFlow switch can be expected.

### Exemplary Embodiment 2

The following describes a communication path control system in Exemplary Embodiment 2 of the present invention. The communication path control system in Exemplary Embodiment 2 includes the path control device 100, the packet transmitting devices 210 to 230, and the terminals 310 and 320, too, as shown as an example in Fig. 1.

The path control device 100 is a device that performs path control in the network managed by the path control device 100, as in Exemplary Embodiment 1. In Exemplary Embodiment 2, the path control device 100 manages the packet transmitting devices 210 to 230. The path control device 100 in Exemplary Embodiment 2 is a device having additional functions to the path control device 100 in Exemplary Embodiment 1.

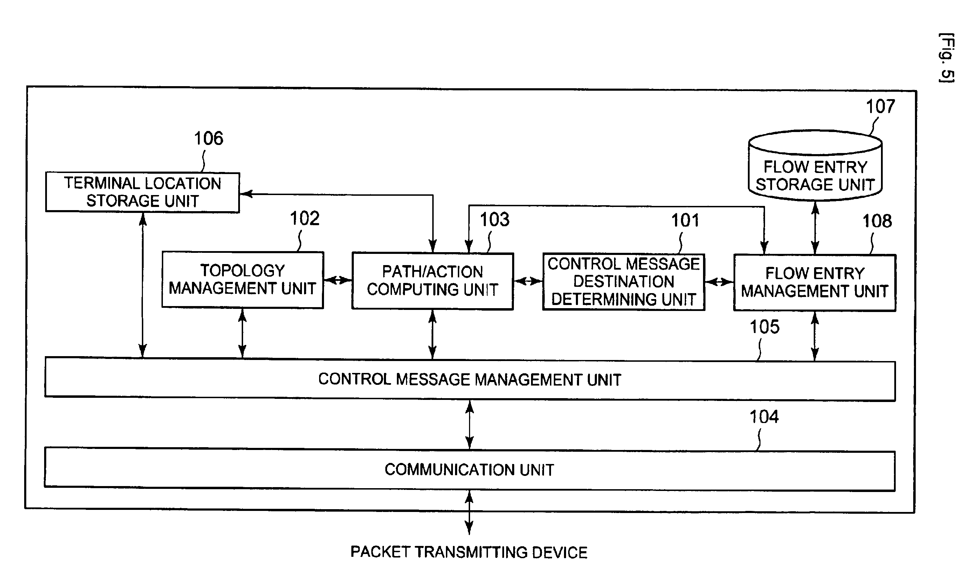

Fig. 5 is a block diagram showing an example of the path control device 100 in Exemplary Embodiment 2. The path control device 100 in Exemplary Embodiment 2 includes the control message destination determining unit 101, the topology management unit 102, the path/action computing unit 103, the communication unit 104, the control message management unit 105, the terminal location storage unit 106, a flow entry storage unit 107, and a flow entry management unit 108.

That is, the path control device 100 in Exemplary Embodiment 2 differs from the path control device 100 in Exemplary Embodiment 1, in that the functions of the flow entry storage unit 107 and the flow entry management unit 108 are added.

The communication unit 104 has a function by which the path control device 100 communicates with the packet transmitting devices 210 to 230.

The topology management unit 102 creates network topology information based on connection relations of the packet transmitting devices 210 to 230 collected via the communication unit 104, and stores the created topology information. The method of creating and storing the topology information is the same as that in Exemplary Embodiment 1. The terminal location storage unit 106 stores terminal location information. The information stored in the terminal location storage unit 106 is the same as that in Exemplary Embodiment 1. For example, the terminal location storage unit 106 is realized by a magnetic disk or the like.

The path/action computing unit 103 computes an action to be executed by the packet transmitting devices 210 to 230 and a packet transmission route, as a process rule (flow entry). In detail, the path/action computing unit 103 specifies locations of a source terminal and a destination terminal and computes a transmission route of a packet, from the network topology information managed by the topology management unit 102 and the location information stored in the terminal location storage unit 106. The path/action computing unit 103 also determines a process (action) to be executed on the packet by the packet transmitting devices 210 to 230 on the transmission route.

The control message destination determining unit 101 determines a packet transmitting device that is to be notified of the process rule (flow entry), from among the packet transmitting devices on the path computed by the path/action computing unit 103. In detail, according to a determination result of the flow entry management unit 108 described later, the control message destination determining unit 101 determines the packet transmitting device that is to be notified of the flow entry (i.e. that is to apply the flow entry), based on whether or not a query about a process for the packet from a packet transmitting device is a first-time query.

The control message management unit 105 analyzes a control message received from the packet transmitting devices 210 to 230, and passes the control message information to a corresponding unit in the path control device (controller) 100. For example, in the case of receiving an information message about detecting a new flow (Packet-In) from any of the packet transmitting devices 210 to 230, the control message management unit 105 requests the path/action computing unit 103 to create a new process rule (flow entry).

The flow entry storage unit 107 stores a flow entry. In detail, the flow entry storage unit 107 stores a database of a flow entry. For example, the flow entry storage unit 107 is realized by a magnetic disk or the like. As shown as an example in Fig. 15, the flow entry storage unit 107 stores a process rule (flow entry) including a comparison rule (rule for matching), an action (including a timer value), and flow statistic information.

The flow entry management unit 108 creates a comparison rule (matching key), based on the information received from the node (packet transmitting device). The flow entry management unit 108 also stores the flow entry computed by the path/action computing unit 103, in the flow entry storage unit 107. When doing so, the flow entry management unit 108 determines whether or not the flow entry is already stored in the flow entry storage unit 107. In the case where the flow entry is already stored in the flow entry storage unit 107, the flow entry management unit 108 determines that the query about the process for the received packet is not the first-time query. In the case where the flow entry is not stored in the flow entry storage unit 107, on the other hand, the flow entry management unit 108 determines that the query about the process for the received packet is the first-time query. The flow entry management unit 108 notifies the control message destination determining unit 101 of the determination result.

Moreover, in response to a request to add or update a process rule (flow entry) from the packet transmitting devices 210 to 230, the flow entry management unit 108 instructs to set the process rule (flow entry) in the flow table storage unit 212.

The control message destination determining unit 101, the topology management unit 102, the path/action computing unit 103, the communication unit 104, the control message management unit 105, and the flow entry management unit 108 are realized by a CPU of a computer operating according to a program (path control program). Alternatively, the control message destination determining unit 101, the topology management unit 102, the path/action computing unit 103, the communication unit 104, the control message management unit 105, and the flow entry management unit 108 may be each realized by dedicated hardware.

Each of the packet transmitting devices 210 to 230 is a device that, when receiving a packet, transmits the received packet based on a predetermined rule, as in Exemplary Embodiment 1. The packet transmitting devices 210 to 230 in Exemplary Embodiment 2 have the same structure as shown as an example in Fig. 2. That is, the packet transmitting device 210 in Exemplary Embodiment 2 includes the control message sending/receiving unit 211, the flow table storage unit 212, and the packet management unit 213.

The control message sending/receiving unit 211 has a function of communicating with the path control device 100.

The flow table storage unit 212 stores a flow table. In the flow table, a combination including: a rule for matching (Header Fields) used for comparison against a packet header; flow statistic information (Counters); and an action (Actions) defining a process for a packet is defined for each flow, as in Exemplary Embodiment 1 (see Fig. 15).

The packet management unit 213 searches the flow table storage unit 212 for a process rule (flow entry) including a comparison rule (matching key) that matches a received packet, and performs a process (e.g. transmitting the packet to a designated port, flooding, discard) defined in an action field of the process rule (flow entry).

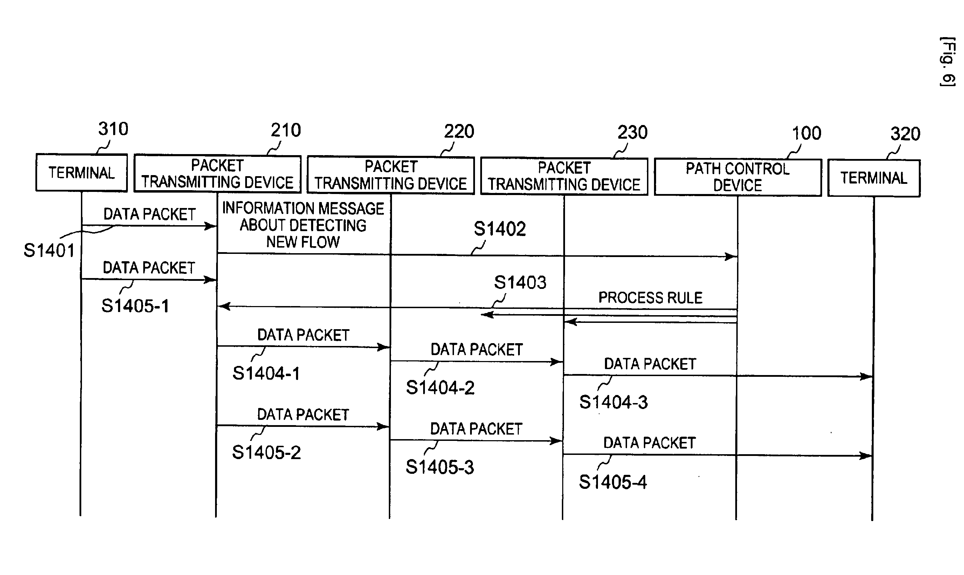

The following describes an operation of the communication path control system in Exemplary Embodiment 2. Fig. 6 is an explanatory diagram showing an example of a packet flow in the OpenFlow network.

When the terminal 310 sends a data packet to the packet transmitting device 210 and the packet transmitting device 210 receives the packet (step S1401), the packet management unit 213 searches the flow table for an entry including a comparison rule (matching key) that matches header information of the received packet. However, since the received packet is the first packet, there is no corresponding entry in the flow table. Accordingly, the packet management unit 213 buffers the received packet, and then sends an information message about detecting a new flow to the path control device 100 (step S1402).

The information message about detecting a new flow includes information necessary for identifying the flow (e.g. a MAC address, an IP address, a port number (for both the source and the destination)) and information indicating a receiving port of the packet.

It is assumed here that the packet transmitting device 210 buffers the received packet and sends the information necessary for identifying the flow to the path control device 100, but the packet transmitting device 210 may send the received packet itself to the path control device 100.

An operation when the path control device 100 receives the information message about detecting a new flow is described below, with reference to Fig. 4.

When the path control device 100 receives the information message about detecting a new flow from the packet transmitting device 210 (step S1501 in Fig. 4), the path/ action computing unit 103 computes a path of the packet, and determines an action of each packet transmitting device located on the path (step S1502). Following this, an operation of determining a packet transmitting device as a destination that is to be notified of a process rule including the action from among the packet transmitting devices on the path is carried out in the path control device 100 (step S1503).

First, the flow entry management unit 108 extracts the information for identifying the flow, from the information message about detecting a new flow. When registering an entry corresponding to the flow in the flow entry storage unit 107, the flow entry management unit 108 determines whether or not the flow entry is already stored in the flow entry storage unit 107.

In the case where the flow entry is already stored in the flow entry storage unit 107, the control message destination determining unit 101 determines to notify the process rule only to the packet transmitting device sending the information message about detecting a new flow. In the case where the flow entry is not stored in the flow entry storage unit 107, on the other hand, the control message destination determining unit 101 determines to notify the process rule to all packet transmitting devices on the path computed by the path/action computing unit 103. The control message destination determining unit 101 notifies the process rule to the determined control message destination (step S1504).

When each of the packet transmitting devices 210 to 230 receives the process rule from the path control device 100, the control message sending/receiving unit 211 sets the received entry in the flow table. The packet management unit 213 then transmits the buffered packet to the packet transmitting device 220, according to the set entry (step S1404-1 in Fig. 6). The packet transmitting devices 220 and 230 on the transmission route through which the packet is to be transmitted have already set the entry, so that the packet is transmitted to the packet transmitting device 220 and then to the packet transmitting device 230, and eventually arrives at the terminal 320 (steps S1404-2 and S1404-3). Subsequently, in the case of sending a packet from the terminal 310 to the terminal 320, the packet is transmitted in the order of the packet transmitting device 210 -> the packet transmitting device 220 -> the packet transmitting device 230 according to the transmission route (steps S1405-1 to S1405-4), and arrives at the terminal 320.

As described above, according to Exemplary Embodiment 2, based on whether or not a packet transmission rule corresponding to a packet for which a query about a process is made is stored in the flow entry storage unit 107, the control message destination determining unit 101 determines a packet transmitting device that is to apply the packet transmission rule. According to such a structure, too, the number of packets used for communication path control can be reduced.

### Example 1

The following describes the present invention by way of specific examples. However, the scope of the present invention is not limited to the following. Example 1 corresponds to the communication path control system in Exemplary Embodiment 1 of the present invention.

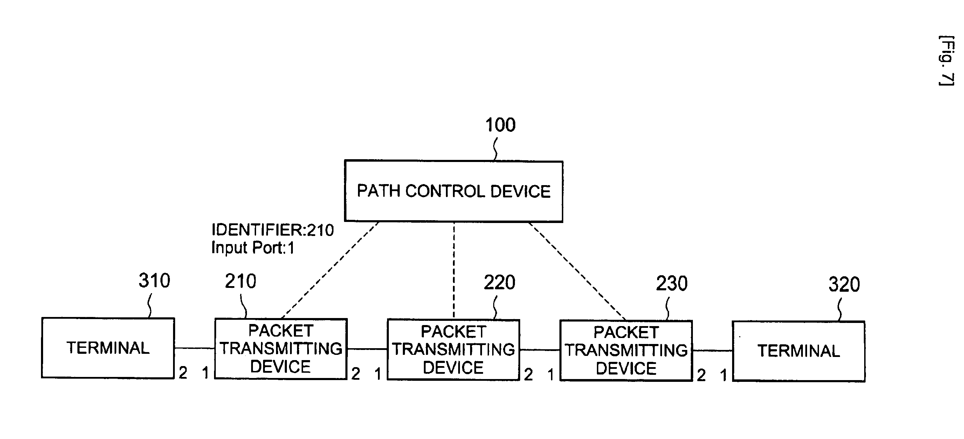

Fig. 7 is an explanatory diagram showing an example of a communication path control system in Example 1 of the present invention. The communication path control system in Example 1 includes the two terminals 310 and 320, the three packet transmitting devices 210 to 230 between the terminals 310 and 320, and the path control device 100 for controlling the network. Note that a one-digit number shown on either side of each of the packet transmitting devices 210 to 230 is a port number of a port in the device, and a three-digit number assigned to each of the packet transmitting devices 210 to 230 is an identifier of the device.

A communication path control system intended for the OpenFlow network is described in Example 1. The path control device 100 corresponds to a device that includes, in the OpenFlow controller, a function of determining a packet transmitting device to be notified of a process rule (flow entry). Meanwhile, each packet transmitting device corresponds to the OpenFlow switch. The following describes an operation of the communication path control system in Example 1, with reference to Fig. 16.

When the terminal 310 sends a data packet to the packet transmitting device 210 and the packet transmitting device 210 receives the packet (step S901), the packet management unit 213 searches the flow table for an entry including a comparison rule (matching key) that matches header information of the received packet. However, since the received packet is the first packet, there is no corresponding entry in the flow table. Accordingly, the packet management unit 213 buffers the received packet, and then sends an information message about detecting a new flow (Packet-In message) to the path control device 100 (step S902).

The Packet-In message includes information necessary for identifying the flow (e.g. a MAC address, an IP address, a port number (for both the source and the destination)) and information indicating a receiving port of the packet.

It is assumed here that the packet transmitting device 210 buffers the received packet and sends the information necessary for identifying the flow to the path control device 100, but the packet transmitting device 210 may send the received packet itself to the path control device 100.

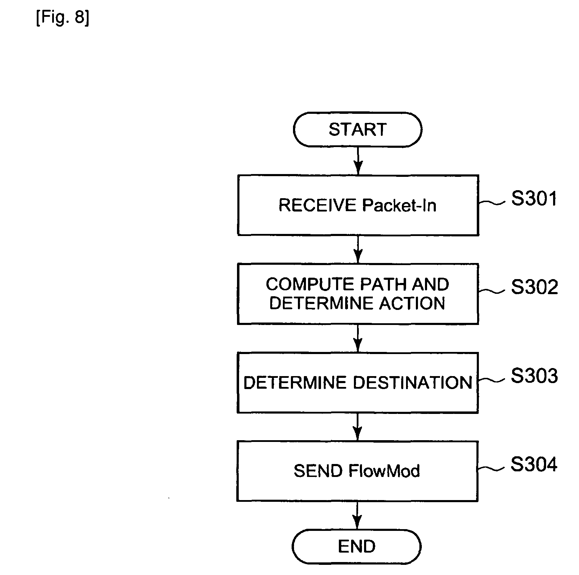

An operation when the path control device 100 receives the Packet-In message is described below. Fig. 8 is a flowchart showing an example of the operation of the path control device 100.

When the path control device 100 receives the Packet-In message from the packet transmitting device 210 (step S301), the path/action computing unit 103 computes a path of the packet, and determines an action of each packet transmitting device located on the path (step S302). Following this, the control message destination determining unit 101 determines a packet transmitting device as a destination that is to be notified of a process rule including the action, from among the packet transmitting devices on the path (step S303). The control message destination determining unit 101 notifies a FlowMod message to the determined control message destination (step S304).

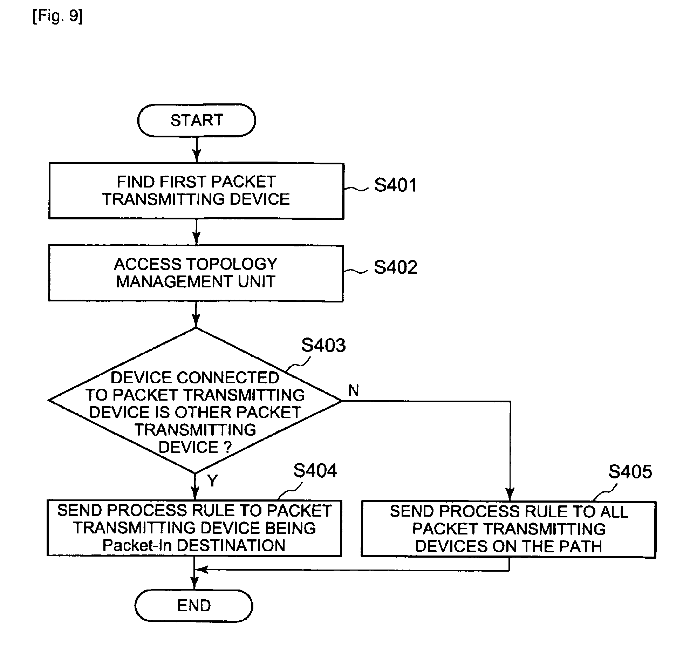

Fig. 9 is an explanatory diagram showing an example of an operation of determining the packet transmitting device to be notified of the process rule. Step S303 is described in detail below, with reference to Fig. 9.

When the Packet-In message is received, the control message destination determining unit 101 determines whether or not the packet transmitting device sending the Packet-In message is the first packet transmitting device from the source terminal of the data packet. In Example 1, this determination is performed using the identifier of the packet transmitting device sending the Packet-In message and, from among port numbers specified from the Packet-In message, the port number of the port (hereafter also referred to as Input Port) at which the packet transmitting device receives the data packet (step S401). Note that the method of determination is not limited to the determination method using the port number and the identifier of the packet transmitting device described in Example 1. Any other method is applicable so long as whether or not the packet transmitting device sending the Packet-In message is the first packet transmitting device from the source terminal of the data packet can be determined.

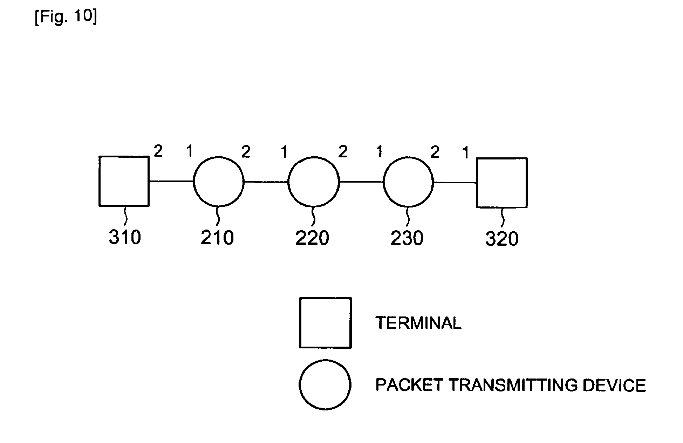

In the communication path control system shown as an example in Fig. 7, the identifier of the packet transmitting device 210 is "210", and the Input Port is "1". Suppose here that the topology management unit 102 computes network topology information from the identifiers and the port numbers in the path control device 100 shown as an example in Fig. 7, and holds the computed network topology information. Fig. 10 is an explanatory diagram showing an example of network topology information computed by the topology management unit 102. In the example shown in Fig. 10, a square denotes a terminal, and a circle denotes a packet transmitting device. A three-digit number below the square or the circle is an identifier of the device, and a one-digit number on either side of the square or the circle is a port number.

The control message destination determining unit 101 accesses the topology management unit 102 (step S402), and determines whether or not a device connected to the packet transmitting device is another packet transmitting device (step S403). Here, the control message destination determining unit 101 checks a device connected to the port of the port number "1" of the device identified by the identifier "210", from the network topology information shown as an example in Fig. 10. In the example shown in Fig. 10, the device connected to the port of the port number "1" of the packet transmitting device 210 is the terminal 310. Thus, the control message destination determining unit 101 detects that the device adjacent to the packet transmitting device 210 is the terminal 310 (step S403: N). The control message destination determining unit 101 accordingly notifies the process rule (path information) to all packet transmitting devices on the path computed by the path/action computing unit 103 (step 405).

In the case where the device adjacent to the packet transmitting device 210 is another packet transmitting device (step S403: Y), on the other hand, the control message destination determining unit 101 notifies the process rule only to the packet transmitting device sending the Packet-In message (step S404). An operation in the case where the device adjacent to the packet transmitting device is another packet transmitting device will be described later.

Having determined the destination of the FlowMod message, the control message destination determining unit 101 sends the FlowMod message to the packet transmitting devices 210 to 230 (step S903 in Fig. 16). The packet management unit 213 transmits the buffered packet to the packet transmitting device 220, according to the set entry (step S904-1 in Fig. 16). The packet transmitting devices 220 and 230 on the transmission route through which the packet is to be transmitted have already set the entry, so that the packet is transmitted to the packet transmitting device 220 and then to the packet transmitting device 230, and eventually arrives at the terminal 320 (steps S904-2 and S904-3).

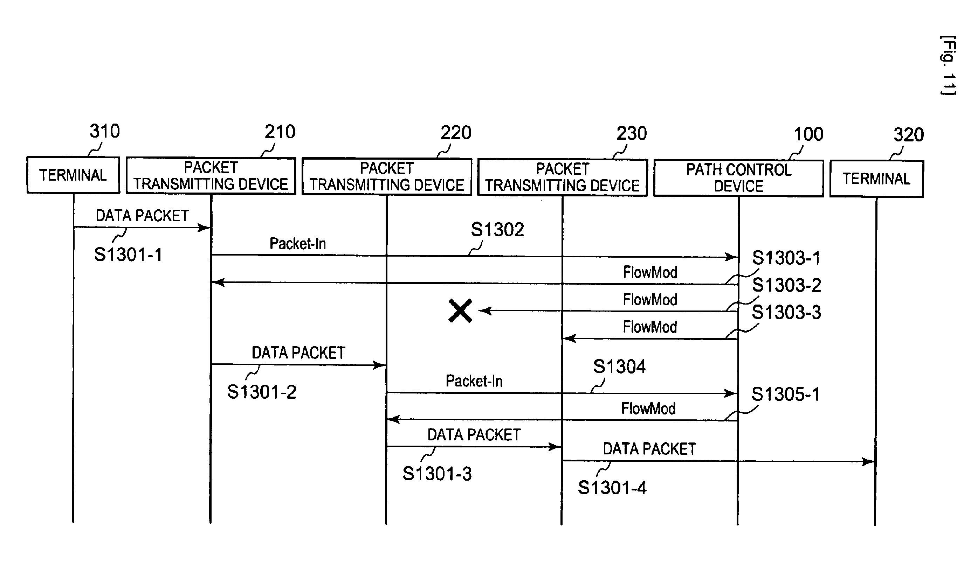

The following describes a situation where step S404 (i.e. an operation in the case where the device sending the data packet to the packet transmitting device is another packet transmitting device) in Fig. 9 is performed. Fig. 11 is an explanatory diagram showing an example of a packet flow in the OpenFlow network.

In the case where the terminal 310 sends the first data packet to the terminal 320, the data packet is first sent to the packet transmitting device 210 connected to the terminal 320 (step S1301-1). When the packet transmitting device 210 receives the packet, the packet management unit 213 searches the flow table for an entry including a comparison rule (matching key) that matches header information of the received packet.

However, since the received packet is the first packet, there is no corresponding entry in the flow table. Accordingly, the control message sending/receiving unit 211 buffers the received packet, and then sends an information message about detecting a new flow (Packet-In message) to the path control device (controller) 100 (step S1302).

The Packet-In message includes information necessary for identifying the flow (e.g. a MAC address, an IP address, a port number (for both the source and the destination)) and information indicating a receiving port of the packet.

It is assumed here that the packet transmitting device 210 buffers the received packet and sends the information necessary for identifying the flow to the path control device (controller) 100, but the control message sending/receiving unit 211 may send the received packet itself to the path control device (controller) 100.

When the path control device (controller) 100 receives the Packet-In message, the path/action computing unit 103 creates a comparison rule (matching key) of a new entry from the received message, and determines a timer value applied to the entry. Information created as the comparison rule is, for instance, the information from "InPort" to "TCP/UDP src port" shown as an example in Fig. 15.

The path/action computing unit 103 further checks the location of the terminal 320 as the destination based on the received message, and computes a packet transmission route from the terminal 310 to the terminal 320. It is assumed here that, as a result of transmission route computation, the transmission route of transmitting the packet in the order of the packet transmitting device 210 -> the packet transmitting device 220 -> the packet transmitting device 230 is computed.

Next, the path/action computing unit 103 creates an entry in which an action defining transmission according to the computed transmission route and the timer value are set for a packet that matches the comparison rule (matching key) of the new entry, for each of the packet transmitting devices 210 to 230. The control message destination determining unit 101 notifies each of the packet transmitting devices 210 to 230 of the created entry, using a FlowMod message (steps S1303-1, S1303-2, S1303-3).

Suppose here that the FlowMod message to the packet transmitting device 210 (the FlowMod message sent in step S1303-1) and the FlowMod message to the packet transmitting device 230 (the FlowMod message sent in step S1303-3) arrive at the packet transmitting devices 210 and 230 respectively, but the FlowMod message to the packet transmitting device 220 (the FlowMod message sent in step S1303-2) does not arrive at the packet transmitting device 220 due to a packet loss, a delay, or the like caused by network congestion.

When the packet transmitting device 210 receives the FlowMod message and the packet management unit 213 completes the setting of the entry in the flow table, the packet management unit 213 transmits the buffered packet to the packet transmitting device 220, according to the set entry (step S1301-2). When the packet transmitting device 220 receives the data packet from the packet transmitting device 210, the packet management unit 213 in the packet transmitting device 220 searches the flow table for an entry including a comparison rule (matching key) that matches the header information of the packet. However, since the FlowMod message does not arrive at the packet transmitting device 220, there is no corresponding entry in the flow table. Accordingly, the control message sending/receiving unit 211 in the packet transmitting device 220 buffers the received packet, and then sends an information message about detecting a new flow (Packet-In message) to the path control device (controller) 100 (step S1304).

When the path control device (controller) 100 receives the Packet-In message, the path/action computing unit 103 creates a comparison rule (matching key) of a new entry based on the received information, and determines a timer value applied to the entry. Information created as the comparison rule is, for instance, the information from "InPort" to "TCP/UDP src port" shown as an example in Fig. 15. The path/action computing unit 103 further checks the location of the terminal 320 as the destination based on the received information, and computes a packet transmission route from the terminal 310 to the terminal 320. It is assumed here that, as a result of transmission route computation, the transmission route of transmitting the packet in the order of the packet transmitting device 220 -> the packet transmitting device 230 is computed.

Next, the control message destination determining unit 101 determines a destination of a FlowMod message. An operation of determining the destination of the FlowMod message is described below, with reference to Fig. 9.

After the path/action computing unit 103 computes the path, the control message destination determining unit 101 determines whether or not the packet transmitting device sending the Packet-In message is the first packet transmitting device from the source terminal of the data packet. In Example 1, this determination is performed using the identifier of the packet transmitting device sending the Packet-In message and, from among port numbers specified from the Packet-In message, the port number of the port at which the packet transmitting device receives the data packet (step S401). Note that the method of determination is not limited to the determination method using the port number and the identifier of the packet transmitting device described in Example 1. Any other method is applicable so long as whether or not the packet transmitting device sending the Packet-In message is the first packet transmitting device from the source terminal of the data packet can be determined.

In the communication path control system shown as an example in Fig. 7, the identifier of the packet transmitting device 220 is "220", and the Input Port is "1". Suppose here that the topology management unit 102 computes network topology information from the identifiers and the port numbers in the path control device 100 shown as an example in Fig. 7, and holds the computed network topology information. Also suppose that the network topology information computed by the topology management unit 102 is the information shown as an example in Fig. 10.

The control message destination determining unit 101 accesses the topology management unit 102 (step S402), and determines whether or not a device connected to the packet transmitting device is another packet transmitting device (step S403). Here, the control message destination determining unit 101 checks a device connected to the port of the port number "1" of the device identified by the identifier "220", from the network topology information shown as an example in Fig. 10. In the example shown in Fig. 10, the device connected to the port of the port number "1" of the packet transmitting device 220 is the packet transmitting device 210. Thus, the control message destination determining unit 101 detects that the device adjacent to the packet transmitting device 220 is the packet transmitting device 210 (step S403: Y). The control message destination determining unit 101 accordingly notifies the process rule only to the packet transmitting device 220 sending the Packet-In message (step 404).

The OpenFlow network is a network in which, when a data packet arrives at a packet transmitting device, the packet transmitting device queries the path control device about a path of the packet, and the path control device notifies each packet transmitting device of an action for the packet so that the data packet can arrive at its intended destination device. Hence, in the case where the packet transmitting device 220 receives the data packet from a device (i.e. a packet transmitting device, the packet transmitting device 210 in Example 1) which is not a terminal, it means that the path control device 100 has already sent the FlowMod message for the data packet to the packet transmitting device 220.

There is an instance where a query is made from the packet transmitting device 220 despite the fact that the FlowMod message has already been sent to the packet transmitting device 220. This occurs in such a case where the FlowMod message from the path control device 100 arrives at the packet transmitting device 220 before the data packet from the packet transmitting device 210, or where the FlowMod message from the path control device 100 is lost. In this case, the path control device 100 does not need to send the path information to all packet transmitting devices on the transmission route, and only needs to send the path information to the packet transmitting device 220 again.

Therefore, the control message destination determining unit 101 sends the FlowMod message only to the packet transmitting device 220, as shown in Fig. 11 (step S1305-1 in Fig. 11). The packet management unit 213 transmits the buffered packet to the packet transmitting device 230, according to the set entry (step S1301-3). Hence, the packet is transmitted to the packet transmitting device 230, and eventually arrives at the terminal 320 (step S1301-4).

As described above, in Example 1, the control message destination determining unit 101 references the network topology in the topology management unit 102, and checks the device connected to the port at which the packet transmitting device receives the data packet, based on the information of the packet transmitting device sending the Packet-In message and the port number of the port at which the packet transmitting device receives the data packet.

In the case where another packet transmitting device is connected to the port at which the packet is received, it means that the path control device 100 has already sent the FlowMod message to each packet transmitting device on the path. In this case, the path control device 100 only needs to send the FlowMod message to the packet transmitting device sending the Packet-In message. In the case where a terminal (e.g. a terminal) which is not a packet transmitting device is connected to the port at which the packet is received, on the other hand, the path control device 100 sends the FlowMod message to all packet transmitting devices on the path.

By the path control device 100 determining the FlowMod destination device according to the packet transmitting device sending the Packet-In message in this manner, it is possible to avoid sending a redundant control packet from the path control device 100 to a packet transmitting device. According to such a structure, an improvement in network use efficiency, a reduction in control packet sending load in the path control device, and a reduction in control packet management load in the packet transmitting device can be expected.

### Example 2

The following describes Example 2 of the present invention. Example 2 corresponds to the communication path control system in Exemplary Embodiment 2 of the present invention.

In Example 2 of the present invention, a database (i.e. the flow entry storage unit 107) for holding a flow entry is provided in the path control device 100 and, based on whether or not path information of a flow for which a query is received is stored in the database, whether or not the flow is a new flow is determined.

In the communication path control system in Example 1 of the present invention, whether or not the flow is a new flow is determined using the topology information. The communication path control system in Example 2 of the present invention differs from the communication path control system in Example 1, in that whether or not the flow is a new flow is determined using the flow entry database.

A communication path control system intended for the OpenFlow network is described in Example 2, as in Example 1. That is, the OpenFlow controller corresponds to the path control device 100 in Exemplary Embodiment 2. In other words, the path control device 100 corresponds to a device that includes, in the OpenFlow controller, a function of determining a packet transmitting device to be notified of a process rule (flow entry). Meanwhile, the OpenFlow switch corresponds to each packet transmitting device in Exemplary Embodiments 1 and 2.

The communication path control system in Example 2 of the present invention is described below, with reference to Fig. 1. The communication path control system in Example 2 includes the two terminals 310 and 320, the three packet transmitting devices 210 to 230 between the terminals 310 and 320, and the path control device 100 for controlling the network. The following describes an operation of the communication path control system in Example 2, with reference to Fig. 16.

When the terminal 310 sends a data packet to the packet transmitting device 210 and the packet transmitting device 210 receives the packet (step S901), the packet management unit 213 searches the flow table for an entry including a comparison rule (matching key) that matches header information of the received packet. However, since the received packet is the first packet, there is no corresponding entry in the flow table. Accordingly, the packet management unit 213 buffers the received packet, and then sends an information message about detecting a new flow (Packet-In message) to the path control device 100 (step S902).

The Packet-In message includes information necessary for identifying the flow (e.g. a MAC address, an IP address, a port number (for both the source and the destination)) and information indicating a receiving port of the packet.

It is assumed here that the packet transmitting device 210 buffers the received packet and sends the information necessary for identifying the flow to the path control device 100, but the packet transmitting device 210 may send the received packet itself to the path control device 100.

An operation when the path control device 100 receives the Packet-In message is described below, with reference to Fig. 8.

When the path control device 100 receives the Packet-In message from the packet transmitting device 210 (step S301), the path/action computing unit 103 computes a path of the packet, and determines an action of each packet transmitting device located on the path (step S302). Following this, the control message destination determining unit 101 determines a packet transmitting device as a destination that is to be notified of a process rule including the action, from among the packet transmitting devices on the path (step S303). The control message destination determining unit 101 notifies a FlowMod message to the determined control message destination (step S304).

After the control message destination determining unit 101 notifies the path information to the packet transmitting device determined as the control message destination, the flow entry management unit 108 registers the path information in the flow entry storage unit 107. Note that, in the case where a process rule is deleted in the packet transmitting device, the path control device 100 may delete path information of a corresponding flow from the flow entry storage unit 107.

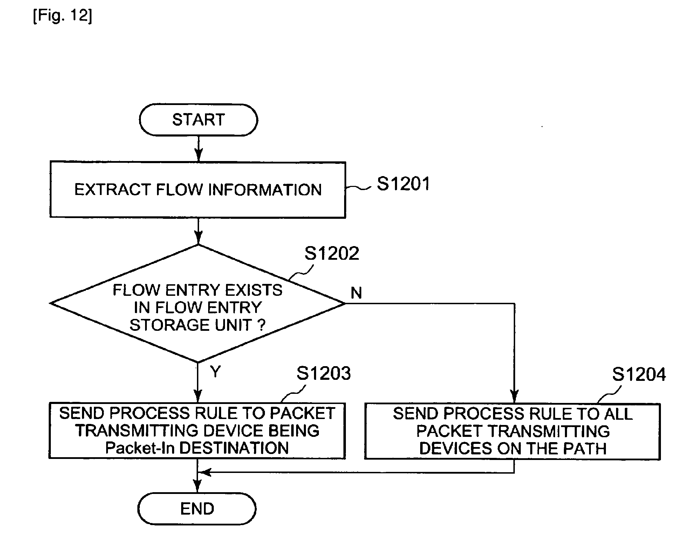

Fig. 12 is an explanatory diagram showing an example of an operation of determining the packet transmitting device to be notified of the process rule. Step S303 for determining the packet transmitting device as the control message destination is described in detail below, with reference to Fig. 12.

When the path control device 100 receives the Packet-In message, first the flow entry management unit 108 extracts an element (header) for specifying the data packet (step S1201). For example, in the case where a flow is identified by a 5-tuple, the flow entry management unit 108 checks the 5-tuple of the data packet.

The flow entry management unit 108 then references the flow entry storage unit 107, to check whether or not a flow entry corresponding to the flow exists (step S1202). In the case where the flow entry does not exist in the flow entry storage unit 107 as a result of the check (step S1202: N), it means that the flow is a new flow. Accordingly, the control message destination determining unit 101 determines to notify the process rule to all packet transmitting devices on the path computed by the path/action computing unit 103, and sends the process rule to the determined control message destination (step S1204).

In the case where the flow entry exists in the flow entry storage unit 107 (step S1202: Y), on the other hand, the control message destination determining unit 101 determines to notify the process rule only to the packet transmitting device sending the Packet-In message (step S1203). An operation in the case where the flow entry exists in the flow entry storage unit 107 will be described later.

Having determined the destination of the FlowMod message in this way, the control message destination determining unit 101 sends the FlowMod message to the packet transmitting devices 210 to 230 (step S903 in Fig. 16).

The packet management unit 213 transmits the buffered packet to the packet transmitting device 220, according to the set entry (step S904-1 in Fig. 16). The packet transmitting devices 220 and 230 on the transmission route through which the packet is to be transmitted have already set the entry, so that the packet is transmitted to the packet transmitting device 220 and then to the packet transmitting device 230, and eventually arrives at the terminal 320 (steps S904-2 and S904-3).

The following describes a situation where step S1203 (i.e. an operation in the case where the received packet is not a new flow) in Fig. 12 is performed, with reference to Fig. 11.

In the case where the terminal 310 sends the first data packet to the terminal 320, the data packet is first sent to the packet transmitting device 210 connected to the terminal 320 (step S1301-1). When the packet transmitting device 210 receives the packet, the packet management unit 213 searches the flow table for an entry including a comparison rule (matching key) that matches header information of the received packet.

However, since the received packet is the first packet, there is no corresponding entry in the flow table. Accordingly, the control message sending/receiving unit 211 buffers the received packet, and then sends an information message about detecting a new flow (Packet-In message) to the path control device (controller) 100 (step S1302).

The Packet-In message includes information necessary for identifying the flow (e.g. a MAC address, an IP address, a port number (for both the source and the destination)) and information indicating a receiving port of the packet.

It is assumed here that the packet transmitting device 210 buffers the received packet and sends the information necessary for identifying the flow to the path control device (controller) 100, but the control message sending/receiving unit 211 may send the received packet itself to the path control device (controller) 100.

When the path control device (controller) 100 receives the Packet-In message, the path/action computing unit 103 creates a comparison rule (matching key) of a new entry from the received message, and determines a timer value applied to the entry. Information created as the comparison rule is, for instance, the information from "InPort" to "TCP/UDP src port" shown as an example in Fig. 15.

The path/action computing unit 103 further checks the location of the terminal 320 as the destination based on the received message, and computes a packet transmission route from the terminal 310 to the terminal 320. It is assumed here that, as a result of transmission route computation, the transmission route of transmitting the packet in the order of the packet transmitting device 210 -> the packet transmitting device 220 → the packet transmitting device 230 is computed.

Next, the path/action computing unit 103 creates an entry in which an action defining transmission according to the computed transmission route and the timer value are set for a packet that matches the comparison rule (matching key) of the new entry, for each of the packet transmitting devices 210 to 230. The control message destination determining unit 101 notifies each of the packet transmitting devices 210 to 230 of the created entry, using a FlowMod message (steps S1303-1, S1303-2, S1303-3).

Suppose here that the FlowMod message to the packet transmitting device 210 (the FlowMod message sent in step S1303-1) and the FlowMod message to the packet transmitting device 230 (the FlowMod message sent in step S1303-3) arrive at the packet transmitting devices 210 and 230 respectively, but the FlowMod message to the packet transmitting device 220 (the FlowMod message sent in step S1303-2) does not arrive at the packet transmitting device 220 due to a packet loss, a delay, or the like caused by network congestion.

When the packet transmitting device 210 receives the FlowMod message and the packet management unit 213 completes the setting of the entry in the flow table, the packet management unit 213 transmits the buffered packet to the packet transmitting device 220, according to the set entry (step S1301-2). When the packet transmitting device 220 receives the data packet from the packet transmitting device 210, the packet management unit 213 in the packet transmitting device 220 searches the flow table for an entry including a comparison rule (matching key) that matches the header information of the packet. However, since the FlowMod message does not arrive at the packet transmitting device 220, there is no corresponding entry in the flow table. Accordingly, the control message sending/receiving unit 211 in the packet transmitting device 220 buffers the received packet, and then sends an information message about detecting a new flow (Packet-In message) to the path control device (controller) 100 (step S1304).

When the path control device (controller) 100 receives the Packet-In message, the path/action computing unit 103 creates a comparison rule (matching key) of a new entry based on the received information, and determines a timer value applied to the entry. Information created as the comparison rule is, for instance, the information from "InPort" to "TCP/UDP src port" shown as an example in Fig. 15. The path/action computing unit 103 further checks the location of the terminal 320 as the destination based on the received information, and computes a packet transmission route from the terminal 310 to the terminal 320. It is assumed here that, as a result of transmission route computation, the transmission route of transmitting the packet in the order of the packet transmitting device 220 -> the packet transmitting device 230 is computed.

Next, the path control device (controller) 100 determines a destination of a FlowMod message. When the path control device 100 receives the Packet-In message, first the flow entry management unit 108 extracts an element (header) for specifying the data packet (step S1201 in Fig. 12). For example, in the case where a flow is identified by a 5-tuple, the flow entry management unit 108 checks the 5-tuple of the data packet.

The flow entry management unit 108 then references the flow entry storage unit 107, to check whether or not a flow entry corresponding to the flow identified by the 5-tuple exists (step S1202). In the case where the flow entry exists in the flow entry storage unit 107 as a result of the check (step S1202: Y), it means that the flow is not a new flow. Accordingly, the control message destination determining unit 101 determines to notify the process rule only to the packet transmitting device sending the information message about detecting a new flow, and sends the process rule to the determined control message destination (step S1203).

Thus, the control message destination determining unit 101 sends the FlowMod message only to the packet transmitting device 220, as shown in Fig. 11 (step S1305-1 in Fig. 11). Upon receiving the FlowMod message, the packet management unit 213 transmits the buffered packet to the packet transmitting device 230, according to the set entry (step S1301-3). Hence, the packet is transmitted to the packet transmitting device 230, and eventually arrives at the terminal 320 (step S1301-4).

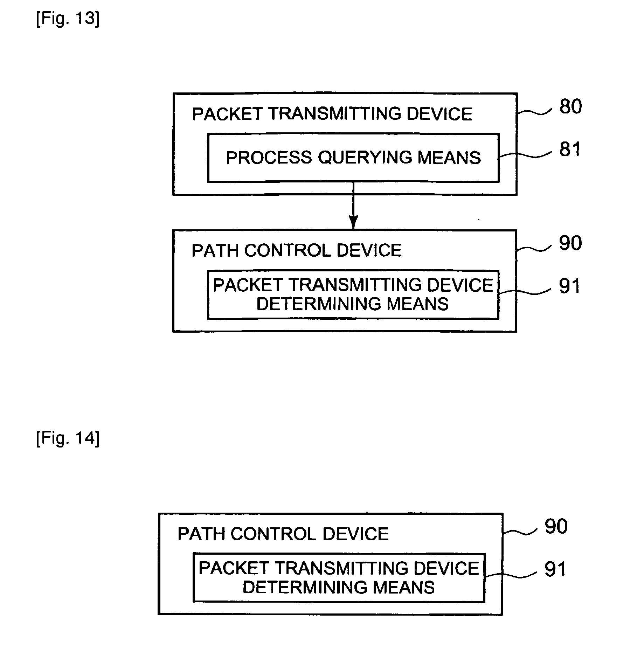

The following describes a minimum structure of the present invention. Fig. 13 is a block diagram showing an example of a minimum structure of a communication path control system according to the present invention. The communication path control system according to the present invention comprises: a packet transmitting device 80 (e.g. the packet transmitting devices 210 to 230) for transmitting a received packet based on a packet transmission rule which is a rule defining a transmission method of the packet; and a path control device 90 (e.g. the path control device 100) for controlling a communication path of the packet, by instructing the packet transmitting device 80 to apply the packet transmission rule.

The packet transmitting device 80 includes process querying means 81 (e.g. the control message sending/receiving unit 211) for querying the path control device 90 about a process (e.g. an action) for the received packet.

The path control device 90 includes packet transmitting device determining means 91 (e.g. the control message destination determining unit 101) for, when receiving the query about the process for the packet from the packet transmitting device 80, determining the packet transmitting device 80 that is to apply the packet transmission rule determined according to the packet, based on whether or not the query about the process for the packet is a first-time query.

According to such a structure, the number of packets used for communication path control can be reduced.

Moreover, the packet transmitting device determining means 91 may determine the packet transmitting device that is to apply the packet transmission rule, based on whether or not the packet transmitting device making the query is a first packet transmitting device on a path through which a terminal device (e.g. the terminal 310) communicating to another device sends the data packet.

Moreover, the path control device 90 may include packet transmission rule storage means (e.g. the flow entry storage unit 107) for storing the packet transmission rule set in the packet transmitting device, wherein the packet transmitting device determining means 91 (e.g. the control message destination determining unit 101, the flow entry management unit 108) determines the packet transmitting device that is to apply the packet transmission rule, based on whether or not the packet transmission rule corresponding to the packet for which the query about the process is made is stored in the packet transmission rule storage means.

Moreover, the path control device 90 may include topology storage means (e.g. the terminal location storage unit 106) for storing topology (e.g. network topology) which is information indicating a connection configuration in which the packet transmitting device connects with another device, wherein the packet transmitting device determining means 91: determines whether or not the packet transmitting device making the query about the process for the packet is the first packet transmitting device on the path, based on the topology and, from among information included in the packet, an identifier of the packet transmitting device making the query and an identifier (e.g. Input Port) of a receiving port of the packet transmitting device at which the query is received; and, based on a result of the determination, determines the packet transmitting device that is to apply the packet transmission rule.

Moreover, the packet transmitting device determining means 91 may: determine that all packet transmitting devices on a path of the data packet sent by a terminal device (e.g. the terminal 310) communicating to another device are to apply the packet transmission rule, in the case where the query about the process for the packet is the first-time query; and determine that the packet transmitting device making the query is to apply the packet transmission rule, in the case where the query about the process for the packet is not the first-time query.

Fig. 14 is a block diagram showing an example of a minimum structure of a path control device according to the present invention. The path control device shown as an example in Fig. 14 is the same as the path control device 90 shown as an example in Fig. 13. According to such a structure, too, the number of packets used for communication path control can be reduced.

While the invention has been particularly shown and described with reference to exemplary embodiments thereof, the invention is not limited to these embodiments. It will be understood by those of ordinary skill in the art that various changes in form and details may be made therein without departing from the scope of the present invention as defined by the claims.

### Industrial Applicability

The present invention is preferably applied to a communication path control system for controlling a communication path.

### Reference Signs List

- 100: path control device
- 101: control message destination determining unit
- 102: topology management unit
- 103: path/action computing unit
- 104: communication unit
- 105: control message management unit
- 106: terminal location storage unit
- 107: flow entry storage unit
- 108: flow entry management unit
- 210 to 230: packet transmitting device
- 211: control message sending/receiving unit
- 212: flow table storage unit
- 213: packet management unit
- 310, 320: terminal

## Claims

1. A communication path control system comprising:
a packet transmitting device (210, 220 and 230) for transmitting a received packet based on a packet transmission rule which is a rule defining a transmission method of the packet; and
a path control device (100) for controlling a communication path of the packet, by instructing the packet transmitting device (210, 220 and 230) to apply the packet transmission rule,
**characterized in that**
the packet transmitting device (210, 220 and 230) includes
process querying means (211) for querying the path control device (100) about a process for the received packet, and
the path control device (100) includes
packet transmitting device determining means (101) for determining a packet transmitting device (210, 220 and 230) that is applied the packet transmission rule decided according to the packet, based on whether or not the query about the process for the packet is a first-time query, when receiving the query about the process for the packet from the packet transmitting device (210, 220 and 230).

2. The communication path control system according to claim 1, wherein the packet transmitting device determining means (101) determines the packet transmitting device (210, 220 and 230) that is applied the packet transmission rule, based on whether or not the packet transmitting device (210, 220 and 230) making the query is a first packet transmitting device on a path through which a terminal device (310) communicating to another device sends the data packet.

3. The communication path control system according to claim 1, wherein the path control device (100) includes
packet transmission rule storage means (107) for storing the packet transmission rule set in the packet transmitting device (210, 220 and 230), and
wherein the packet transmitting device determining means (101, 108) determines the packet transmitting device (210, 220 and 230) that is applied the packet transmission rule, based on whether or not the packet transmission rule corresponding to the packet for which the query about the process is made is stored in the packet transmission rule storage means (107).

4. The communication path control system according to claim 2, wherein the path control device (100) includes
topology storage means (106) for storing topology which is information indicating a connection configuration in which the packet transmitting device (210, 220 and 230) connects with another device, and
wherein the packet transmitting device determining means (101): determines whether or not the packet transmitting device (210, 220 and 230) making the query about the process for the packet is the first packet transmitting device on the path, based on the topology and, from among information included in the packet, an identifier of the packet transmitting device (210, 220 and 230) making the query and an identifier of a receiving port of the packet transmitting device at which the query is received; and, based on a result of the determination, determines the packet transmitting device (210, 220 and 230) that is applied the packet transmission rule.

5. The communication path control system according to any one of claims 1 to 4, wherein the packet transmitting device determining means (101) determines that all packet transmitting devices (210, 220 and 230) on a path of the data packet sent by a terminal device (310) communicating to another device are applied the packet transmission rule, in the case where the query about the process for the packet is the first-time query, and determines that the packet transmitting device (210, 220 and 230) making the query is applied the packet transmission rule, in the case where the query about the process for the packet is not the first-time query.

6. A path control device (100) **characterized by** comprising
packet transmitting device determining means (101) for, when receiving a query about a process for a packet from a packet transmitting device (210, 220 and 230) that transmits a received packet based on a packet transmission rule which is a rule defining a transmission method of the packet, determining a packet transmitting device (210, 220 and 230) that is applied the packet transmission rule determined according to the packet, based on whether or not the query about the process for the packet is a first-time query.

7. A communication path control method wherein a packet transmitting device (210, 220 and 230) for transmitting a received packet based on a packet transmission rule which is a rule defining a transmission method of the packet queries a path control device (100) for controlling a communication path of the packet, about a process for the received packet, and
wherein, when receiving the query about the process for the packet from the packet transmitting device (210, 220 and 230), the path control device (100) determines a packet transmitting device (210, 220 and 230) that is applied the packet transmission rule determined according to the packet, based on whether or not the query about the process for the packet is a first-time query.

8. The communication path control method according to claim 7, wherein the path control device (100) determines the packet transmitting device (210, 220 and 230) that is applied the packet transmission rule, based on whether or not the packet transmitting device (210, 220 and 230) making the query is a first packet transmitting device on a path of the data packet sent by a terminal device (310) communicating to another device.

9. The communication path control method according to claim 7, wherein the path control device (100) determines the packet transmitting device (210, 220 and 230) that is applied the packet transmission rule, based on whether or not the packet transmission rule corresponding to the packet for which the query about the process is made is stored in packet transmission rule storage means (107) for storing the packet transmission rule set in the packet transmitting device (210, 220 and 230).

10. A path control program for causing a computer to execute
a packet transmitting device determining process of, when receiving a query about a process for a packet from a packet transmitting device (210, 220 and 230) that transmits a received packet based on a packet transmission rule which is a rule defining a transmission method of the packet, determining a packet transmitting device (210, 220 and 230) that is applied the packet transmission rule determined according to the packet, based on whether or not the query about the process for the packet is a first-time query.

## Patentansprüche

1. Kommunikationspfadsteuersystem, das Folgendes umfasst:
ein Paketübertragungsgerät (210, 220 und 230) zum Übertragen eines empfangenen Pakets auf der Basis einer Paketübertragungsregel, die eine Regel ist, die ein Übertragungsverfahren für das Paket definiert; und
ein Pfadsteuergerät (100) zum Steuern eines Kommunikationspfads des Pakets durch Anweisen des Paketübertragungsgeräts (210, 220 und 230) zum Anwenden der Paketübertragungsregel,
**dadurch gekennzeichnet, dass**
das Paketübertragungsgerät (210, 220 und 230) Prozessanfragemittel (211) zum Befragen des Pfadsteuergerät (100) über einen Prozess für das empfangene Paket beinhaltet, und
das Pfadsteuergerät (100) PaketübertragungsgerätBestimmungsmittel (101) zum Bestimmen eines Paketübertragungsgeräts (10, 220 und 230), auf das die je nach dem Paket beschlossene Paketübertragungsregel angewendet wird, auf der Basis davon beinhaltet, ob die Anfrage über den Prozess für das Paket eine Erstanfrage ist oder nicht, wenn die Anfrage über den Prozess für das Paket von dem Paketübertragungsgerät (210, 220 und 230) empfangen wird.

2. Kommunikationspfadsteuersystem nach Anspruch 1, wobei das Paketübertragungsgerät-Bestimmungsmittel (101) das Paketübertragungsgerät (210, 220 und 230), auf das die Paketübertragungsregel angewendet wird, auf der Basis davon bestimmt, ob das die Anfrage machende Paketübertragungsgerät (210, 220 und 230) ein erstes Paketübertragungsgerät auf einem Pfad, über den ein mit einem anderen Gerät kommunizierendes Endgerät (310) das Datenpaket sendet, ist oder nicht.

3. Kommunikationspfadsteuersystem nach Anspruch 1, wobei das Pfadsteuergerät (100) Folgendes umfasst:
Paketübertragungsregel-Speichermittel (107) zum Speichern der im Paketübertragungsgerät (210, 220 und 230) aufgestellten Paketübertragungsregel, und
wobei das Paketübertragungsgerät-Bestimmungsmittel (101, 108) das Paketübertragungsgerät (210, 220 und 230), auf das die Paketübertragungsregel angewendet wird, auf der Basis davon bestimmt, ob die Paketübertragungsregel entsprechend dem Paket, für die die Anfrage über den Prozess ergeht, in dem Paketübertragungsregel-Speichermittel (107) gespeichert ist oder nicht.

4. Kommunikationspfadsteuersystem nach Anspruch 2, wobei das Pfadsteuergerät (100) Folgendes beinhaltet:
Topologiespeichermittel (106) zum Speichern von Topologie, die eine Information ist, die eine Verbindungsinformation anzeigt, in der das Paketübertragungsgerät (210, 220 und 230) mit einem anderen Gerät in Verbindung ist, und
wobei das Paketübertragungsgerät-Bestimmungsmittel (101) bestimmt, ob das Paketübertragungsgerät (210, 220 und 230), das die Anfrage über den Prozess für das Paket macht, das erste Paketübertragungsgerät auf dem Pfad ist oder nicht, auf der Basis der Topologie und, aus in dem Paket enthaltenen Informationen, eines Identifikators des die Anfrage machenden Paketübertragungsgeräts (210, 220 und 230) und eines Identifikators eines Empfangsports des Paketübertragungsgeräts, an dem die Anfrage empfangen wird; und auf der Basis eines Ergebnisses der Bestimmung das Paketübertragungsgerät (210, 220 und 230) bestimmt, auf das die Paketübertragungsregel angewendet wird.

5. Kommunikationspfadsteuersystem nach einem der Ansprüche 1 bis 4, wobei das Paketübertragungsgerät-Bestimmungsmittel (101) bestimmt, dass die Paketübertragungsregel auf alle Paketübertragungsgeräte (210, 220 und 230) auf einem Pfad des Datenpakets, das von einer mit einem anderen Gerät kommunizierenden Endgerät (310) gesendet wird, angewendet wird, falls die Anfrage über den Prozess für das Paket die Erstanfrage ist, und bestimmt, dass die Paketübertragungsregel auf das die Anfrage machende Paketübertragungsgerät (210, 220 und 230) angewendet wird, falls die Anfrage über den Prozess für das Paket nicht die Erstanfrage ist.

6. Pfadsteuergerät (100), **dadurch gekennzeichnet, dass** es Paketübertragungsgerät-Bestimmungsmittel (101) umfasst, um beim Empfangen einer Anfrage über einen Prozess für ein Paket von einem Paketübertragungsgerät (210, 220 und 230), das ein empfangenes Paket überträgt, auf der Basis einer Paketübertragungsregel, die eine Regel ist, die ein Übertragungsverfahren des Pakets definiert, ein Paketübertragungsgerät (210, 220 und 230), auf das die gemäß dem Paket bestimmte Paketübertragungsregel angewendet wird, auf der Basis davon zu bestimmen, ob die Anfrage über den Prozess für das Paket eine Erstanfrage ist oder nicht.

7. Kommunikationspfadsteuerverfahren, wobei ein Paketübertragungsgerät (210, 220 und 230) zum Übertragen eines empfangenen Pakets auf der Basis einer Paketübertragungsregel, die eine Regel ist, die ein Übertragungsverfahren des Pakets definiert, eine Anfrage an ein Pfadsteuergerät (100) zum Steuern eines Kommunikationspfads des Pakets über einen Prozess für das empfangene Paket richtet, und
wobei, beim Empfangen der Anfrage über den Prozess für das Paket von dem Paketübertragungsgerät (210, 220 und 230), das Paketsteuergerät (100) ein Paketübertragungsgerät (210, 220 und 230), auf das die gemäß dem Paket bestimmte Paketübertragungsregel angewendet wird, auf der Basis davon bestimmt, ob die Anfrage über den Prozess für das Paket eine Erstanfrage ist oder nicht.

8. Kommunikationspfadsteuerverfahren nach Anspruch 7, wobei das Pfadsteuergerät (100) das Paketübertragungsgerät, auf das die Paketübertragungsregel angewendet wird, auf der Basis davon bestimmt, ob das die Anfrage machende Paketübertragungsgerät (210, 220 und 230) ein erstes Paketübertragungsgerät auf einem Pfad des Datenpakets ist oder nicht, das von einem mit einem anderen Gerät kommunizierenden Endgerät (310) gesendet wird.

9. Kommunikationspfadsteuerverfahren nach Anspruch 7, wobei das Pfadsteuergerät (100) das Paketübertragungsgerät (210, 220 und 230), auf das die Paketübertragungsregel angewendet wird, auf der Basis davon bestimmt, ob die Paketübertragungsregel entsprechend dem Paket, für das die Anfrage über den Prozess gemacht wird, in dem Paketübertragungsregel-Speichermittel (107) zum Speichern der im Paketübertragungsgerät (210, 220 und 230) festgelegten Paketübertragungsregel gespeichert ist oder nicht.

10. Pfadsteuerprogramm, um zu bewirken, dass ein Computer Folgendes ausführt:
einen Paketübertragungsgerät-Bestimmungsprozess des Bestimmens, beim Empfangen einer Anfrage über einen Prozess für ein Paket von einem Paketübertragungsgerät (210, 220 und 230), das ein empfangenes Paket sendet, auf der Basis einer Paketübertragungsregel, die eine Regel ist, die ein Übertragungsverfahren des Pakets definiert, eines Paketübertragungsgeräts (210, 220 und 230), auf das die gemäß dem Paket ermittelte Paketübertragungsregel angewendet wird, auf der Basis davon, ob die Anfrage über den Prozess für das Paket eine Erstanfrage ist oder nicht.

## Revendications

1. Système de contrôle de chemin de communication, comprenant :
un dispositif de transmission de paquet (210, 220 et 230) pour transmettre un paquet reçu sur la base d'une règle de transmission de paquet qui est une règle définissant un procédé de transmission du paquet ; et
un dispositif de contrôle de chemin (100) pour contrôler un chemin de communication du paquet, en instruisant le dispositif de transmission de paquet (210, 220 et 230) d'appliquer la règle de transmission de paquet,
**caractérisé en ce que**
le dispositif de transmission de paquet (210, 220 et 230) comprend
un moyen d'interrogation de processus (211) pour interroger le dispositif de contrôle de paquet (100) sur le processus pour le paquet reçu, et
le dispositif de contrôle de chemin (100) comprend
un moyen de détermination de dispositif de transmission de paquet (101) pour déterminer un dispositif de transmission de paquet (210, 220 et 230) qui a appliqué la règle de transmission de paquet décidée conformément au paquet, sur la base de si l'interrogation sur le processus pour le paquet est une première interrogation ou non, en recevant l'interrogation sur le processus du paquet du dispositif de transmission de paquet (210, 220 et 230).

2. Système de contrôle de chemin de communication selon la revendication 1, dans lequel le moyen de détermination de dispositif de transmission de paquet (101) détermine le dispositif de transmission de paquet (210, 220 et 230) qui a appliqué la règle de transmission de paquet, sur la base de si le dispositif de transmission de paquet (210, 220 et 230) faisant l'interrogation est ou non un premier dispositif de transmission de paquet sur un chemin à travers lequel un dispositif terminal (310) communiquant avec un autre dispositif envoie le paquet de données.

3. Système de contrôle de chemin de communication selon la revendication 1, dans lequel le dispositif de contrôle de chemin (100) comprend :
un moyen de stockage de règles de transmission de paquet (107) pour stocker le jeu de règles de transmission de paquet dans le dispositif de transmission de paquet (210, 220 et 230), et
dans lequel le moyen de détermination de dispositif de transmission de paquet (101, 108) détermine le dispositif de transmission de paquet (210, 220 et 230) qui a appliqué la règle de transmission de paquet, sur la base de si la règle de transmission de paquet correspondant au paquet pour lequel l'interrogation sur le processus est faite est stockée ou non dans le moyen de stockage de règles de transmission de paquet (107).

4. Système de contrôle de chemin de communication selon la revendication 2, dans lequel le dispositif de contrôle de chemin (100) comprend
un moyen de stockage de topologie (106) pour stocker une topologie qui est des informations indiquant une configuration de connexion dans laquelle le dispositif de transmission de paquet (210, 220 et 230) est connecté à un autre dispositif, et
dans lequel le moyen de détermination de dispositif de transmission de paquet (101) :
détermine si le dispositif de transmission de paquet (210, 220 et 230) faisant l'interrogation sur le processus pour le paquet est le premier dispositif de transmission de paquet ou non sur le chemin, sur la base de la topologie et, de parmi les informations incluses dans le paquet, un identificateur du dispositif de transmission de paquet (210, 220 et 230) faisant l'interrogation et un identificateur du port de réception du dispositif de transmission de paquet auquel l'interrogation est reçue ; et, sur la base d'un résultat de la détermination, détermine le dispositif de transmission de paquet (210, 220 et 230) qui a appliqué la règle de transmission de paquet.

5. Système de contrôle de chemin de communication selon l'une quelconque des revendications 1 à 4, dans lequel le moyen de détermination de dispositif de transmission de paquet (101) détermine que tous les dispositifs de transmission de paquet (210, 220 et 230) sur un chemin du paquet de données envoyé par un dispositif terminal (310) communiquant avec un autre dispositif ont appliqué la règle de transmission de paquet, dans le cas dans lequel l'interrogation sur le processus pour le paquet est la première interrogation, et détermine que le dispositif de transmission de paquet (210, 220 et 230) faisant l'interrogation a appliqué la règle de transmission de paquet, dans le cas dans lequel l'interrogation sur le processus pour le paquet n'est pas la première interrogation.

6. Dispositif de contrôle de chemin (100) caractérisé en comprenant :
un moyen de détermination de dispositif de transmission de paquet (101) pour, en recevant une interrogation sur un processus pour un paquet d'un dispositif de transmission de paquet (210, 220 et 230) qui transmet un paquet reçu sur la base d'une règle de transmission de paquet qui est une règle définissant un procédé de transmission du paquet, détermine un dispositif de transmission de paquet (210, 220 et 230) qui a appliqué la règle de transmission de paquet déterminée conformément au paquet, sur la base de si l'interrogation sur le processus pour le paquet est une première interrogation ou non.

7. Procédé de contrôle de chemin de communication, dans lequel un dispositif de transmission de paquet (210, 220 et 230) pour transmettre un paquet reçu sur la base d'une règle de transmission de paquet qui est une règle définissant un procédé de transmission du paquet interroge un dispositif de contrôle de chemin (100) pour contrôler un chemin de communication du paquet, sur un processus pour le paquet reçu, et
dans lequel, en recevant l'interrogation sur le processus pour le paquet du dispositif de transmission de paquet (210, 220 et 230), le dispositif de contrôle de chemin (100) détermine un dispositif de transmission de paquet (210, 220 et 230) qui a appliqué la règle de transmission de paquet déterminée conformément au paquet, sur la base de si l'interrogation sur le processus pour le paquet est une première interrogation ou non.

8. Procédé de contrôle de chemin de communication selon la revendication 7, dans lequel le dispositif de contrôle de chemin (100) détermine le dispositif de transmission de paquet (210, 220 et 230) qui a appliqué la règle de transmission de paquet, sur la base de si le dispositif de transmission de paquet (210, 220 et 230) faisant l'interrogation est un premier dispositif de transmission de paquet ou non sur un chemin de paquet de données envoyé par un dispositif terminal (310) communiquant avec un autre dispositif

9. Le procédé de contrôle de chemin de communication selon la revendication 7, dans lequel le dispositif de contrôle de chemin (100) détermine le dispositif de transmission de paquet (210, 220 et 230) qui a appliqué la règle de transmission de paquet, sur la base de si la règle de transmission de paquet correspondant au paquet pour lequel l'interrogation sur le processus est faite est stockée ou non dans le moyen de stockage de règles de transmission de paquet (107) pour stocker un jeu de règles de transmission de paquet dans le dispositif de transmission de paquet (210, 220 et 230).

10. Programme de contrôle de chemin pour faire qu'un ordinateur exécute
un processus de détermination de dispositif de transmission de paquet, en recevant une interrogation sur un processus pour un paquet d'un dispositif de transmission de paquet (210, 220 et 230) qui transmet un paquet reçu sur la base d'une règle de transmission de paquet qui est une règle définissant un procédé de transmission du paquet, déterminant un dispositif de transmission de paquet (210, 220 et 230) qui a appliqué la règle de transmission de paquet déterminée conformément au paquet, sur la base de si l'interrogation sur le processus pour le paquet est une première interrogation ou non.
